(19)

**Europäisches Patentamt**
**European Patent Office**
**Office européen des brevets**

(11)   **EP 4 443 593 B1**

(12)   **EUROPEAN PATENT SPECIFICATION**

(45) Date of publication and mention
of the grant of the patent:
**04.02.2026   Bulletin 2026/06**

(21) Application number: **23763685.7**

(22) Date of filing: **28.02.2023**

(51) International Patent Classification (IPC):
$H01M\ 10/058^{(2010.01)}$   $H01M\ 50/572^{(2021.01)}$
$H01M\ 50/571^{(2021.01)}$   $H01M\ 10/42^{(2006.01)}$
$H01M\ 10/0568^{(2010.01)}$   $H01M\ 10/052^{(2010.01)}$
$H01M\ 50/178^{(2021.01)}$   $H01M\ 50/682^{(2021.01)}$

(52) Cooperative Patent Classification (CPC):
**H01M 10/052; H01M 10/0568; H01M 10/058;**
**H01M 10/4235; H01M 50/178; H01M 50/571;**
**H01M 50/572;** H01M 2220/20; H01M 2300/0085;
Y02E 60/10; Y02P 70/50

(86) International application number:
**PCT/KR2023/002801**

(87) International publication number:
**WO 2023/167486 (07.09.2023 Gazette 2023/36)**

(54) **BATTERY CELL, BATTERY MODULE, AND METHOD OF PREPARING THE BATTERY CELL**

BATTERIEZELLE, BATTERIEMODUL UND VERFAHREN ZUR HERSTELLUNG DER
BATTERIEZELLE

CELLULE DE BATTERIE, MODULE DE BATTERIE ET PROCÉDÉ DE FABRICATION DE LA
CELLULE DE BATTERIE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **02.03.2022   KR 20220027003**
**02.03.2022   KR 20220027007**

(43) Date of publication of application:
**09.10.2024   Bulletin 2024/41**

(73) Proprietor: **LG Energy Solution, Ltd.**
**Seoul 07335 (KR)**

(72) Inventors:
• **RYU, Ji Hoon**
**Daejeon 34122 (KR)**
• **KIM, Dong Kyu**
**Daejeon 34122 (KR)**

• **YOON, Yeo Min**
**Daejeon 34122 (KR)**
• **LIM, Tae Seob**
**Daejeon 34122 (KR)**
• **LEE, Jung Pil**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
CN-A- 103 000 956     CN-A- 113 161 621
JP-B2- 7 010 866      KR-A- 20200 020 234
KR-A- 20220 009 486    KR-B1- 100 558 843
KR-B1- 102 278 772     KR-B1- 102 311 506

**EP 4 443 593 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**Description**

**TECHNICAL FIELD**

Cross-reference to Related Applications

This application claims priority from Korean Patent Application Nos. 10-2022-0027003, filed on March 2, 2022, and 10-2022-0027007, filed on March 2, 2022.

Technical Field

The present disclosure relates to a battery cell with improved battery durability and battery lifetime, a battery module, and a method of preparing the battery cell.

**BACKGROUND ART**

Currently, commercially available secondary batteries include a nickel cadmium battery, a nickel hydride battery, a nickel zinc battery, or a lithium secondary battery. Among them, since the lithium secondary battery has almost no memory effect in comparison to the nickel-based secondary batteries, it is free to charge and discharge. Also, the lithium secondary battery is in the spotlight due to its advantages of very low self-discharge rate and high energy density.

The lithium secondary battery mainly uses a lithium-based oxide and a carbon material as a positive electrode active material and a negative electrode active material, respectively. The lithium secondary battery includes an electrode assembly, in which a positive electrode plate and a negative electrode plate, which are respectively coated with the positive electrode active material and the negative electrode active material, are disposed with a separator disposed therebetween, and an exterior material for sealing and accommodating the electrode assembly together with an electrolyte solution.

In general, lithium secondary batteries may be classified into a can-type secondary battery and a pouch-type secondary battery according to a type of the exterior material. With respect to the can-type secondary battery, an electrode assembly is embedded in a metal can. With respect to the pouch-type secondary battery, an electrode assembly is embedded in a pouch formed of an aluminum laminate sheet.

Recently, secondary batteries have been widely used not only in small devices such as portable electronic devices, but also in medium and large-sized devices such as automobiles and power storage devices of power plants. In a case in which the secondary battery is used in such medium and large-sized devices, a large number of battery cells are electrically connected to increase capacity and output. Particularly, a pouch-type battery cell, which is easy to stack, is often used in such medium and large-sized devices. Herein, the pouch-type battery cell refers to a battery cell in which an electrode assembly is accommodated in a pouch-type case formed of a flexible polymer material having an irregular shape.

A pouch sheet, which is a case of the pouch-type battery cell, has a flexible material. In addition, the pouch sheet includes a convex portion, in which an accommodation space for accommodating the electrode assembly is formed on one side, and an injection portion which is formed on the other side and is opened such that the electrolyte solution is injected.

The electrode assembly may include a positive electrode having a positive electrode active material layer formed on a positive electrode collector, a negative electrode having a negative active material layer formed on a negative electrode collector, a separator disposed between the positive electrode and the negative electrode, and an electrolyte.

An electrode tab is formed on at least one side of a metal foil used in the positive electrode collector and the negative electrode collector. The electrode tab has a bent shape during a process of welding with an electrode lead. However, since the electrode tab is very thin, it has relatively poor mechanical stiffness, and thus, disconnection of the electrode tab may easily occur due to a repeated operation, in which the bent shape of the electrode tab is finely folded and unfolded, or external impact. Furthermore, the electrode tab may be corroded by a portion of a lithium salt included in the electrolyte during charge and discharge, and the disconnection of the electrode tab may also occur when such corrosion continues.

The disconnection of the electrode tab leads to deactivation of the electrode connected to the electrode tab, and, as a result, there was a problem in that 'sudden death' of the battery cell occurs to significantly degrade charge and discharge performance and life characteristics. Particularly, with respect to secondary batteries included in a car pack, since they are exposed to frequent vibration and impact, the disconnection of the electrode tab may occur more frequently, and, accordingly, there is a problem in that lifetime of the battery cell is rapidly reduced.

Recently, since the mechanical stiffness of the electrode tab is also reduced as the current collector is made thinner to increase energy density of the battery cell, disconnection frequently occurs at a bent portion of the electrode tab or at a connection portion between the electrode tab and the electrode. Also, since a width of the electrode tab is narrow and a length of the tab is shortened as the battery cell is miniaturized, there is a problem in that the disconnection of the electrode tab is more likely to occur when the battery cell is subjected to an external impact.

Therefore, there is a need to develop a method capable of improving performance and service life of the battery cell by preventing the disconnection of the electrode tab due to the external impact or the electrolyte. KR 100 558 843 B1, CN 103 000 956 A and CN 113 161 621 A disclose known methods related to manufacture of pouch cells.

## DISCLOSURE OF THE INVENTION

### TECHNICAL PROBLEM

An aspect of the present disclosure provides a battery cell in which battery durability and battery lifetime are improved by disposing a gel electrolyte with low fluidity around an electrode tab to prevent disconnection due to movement and deformation of the electrode tab and by disposing a liquid electrolyte with high wettability around an electrode assembly except for a periphery of the electrode tab to increase wettability of an electrolyte solution with respect to the electrode assembly.

Another aspect of the present disclosure provides a battery module including the battery cell.

Another aspect of the present disclosure provides a method of preparing the battery cell.

### TECHNICAL SOLUTION

The invention is defined in the appended claims. According to an embodiment, the present disclosure provides a battery cell which includes a cell case having an accommodation space;

an electrode assembly which is accommodated in the accommodation space and includes a plurality of electrodes, an electrode tab formed on at least one side of each of the plurality of electrodes, and a separator disposed between the plurality of electrodes;
a gel electrolyte which contains a first molarity of a first lithium salt and is accommodated in the accommodation space while surrounding the electrode tab; and
a liquid electrolyte which contains a second molarity, which is lower than the first molarity, of a second lithium salt and is accommodated between the plurality of electrodes.

The battery cell may include a passivation layer which is formed at an interface between the electrode tab and the gel electrolyte by combining the first lithium salt and cations of the electrode tab.

The passivation layer may include at least one selected from $AlF_3$ and LiF.

The first lithium salt and the second lithium salt may be the same or different from each other.

The first lithium salt may include at least one selected from $LiPF_6$ (lithium hexafluorophosphate) and $LiBF_4$ (lithium tetrafluoroborate), and the second lithium salt may include at least one selected from $LiPF_6$, LiFSI (lithium bis(fluorosulfonyl)imide), LiTFSI (lithium bis(trifluoromethanesulfonyl)imide), and LiBOB (lithium bis(oxalato)borate).

The second molarity of the second lithium salt may be lower than the first molarity of the first lithium salt by 0.1 M or more, and, specifically, a ratio of the second molarity of the second lithium salt to the first molarity of the first lithium salt may be in a range of 1:1.3 to 1:5.

The gel electrolyte may be disposed only on one side of the electrode assembly, on which the electrode tab is formed, in the accommodation space to prevent movement and deformation of the electrode tab in the battery cell by an external impact, and the liquid electrolyte may surround another side of the electrode assembly on which the gel electrolyte is not formed.

According to another embodiment, the present disclosure provides a battery module including at least one battery cell of the present disclosure.

According to another embodiment, the present disclosure provides a method of preparing a battery cell which includes steps of: preparing an electrode assembly which includes a plurality of electrodes, an electrode tab formed on at least one side of each of the plurality of electrodes, and a separator disposed between the plurality of electrodes;

disposing the electrode assembly in an accommodation space of a cell case;
injecting a gel electrolyte composition containing a first molarity of a first lithium salt and a curable compound into the accommodation space and disposing the gel electrolyte composition around the electrode tab;
curing the gel electrolyte composition to form a gel electrolyte surrounding the electrode tab; and
injecting a liquid electrolyte containing a second molarity of a second lithium salt to be accommodated between the plurality of electrodes.

The method may further include a step of forming a blocking portion between the accommodation space of the cell case and an injection space of the gel electrolyte composition, before the injecting of the gel electrolyte composition.

## ADVANTAGEOUS EFFECTS

In a battery cell according to the present disclosure, since a gel electrolyte with low fluidity is disposed around an electrode tab, movement and deformation of the electrode tab may be minimized by the gel electrolyte in a semi-solid state, which is formed around the electrode tab, when an external impact is applied to the battery cell. Accordingly, in a case in which the battery cell of the present disclosure is mounted in a vehicle, since disconnection of the electrode tab may be prevented by minimizing damage of the electrode tab even if continuous impact and vibration generated during movement are transmitted to the battery cell, performance and lifetime of the battery cell may be effectively improved.

Also, since the battery cell according to the present disclosure improves wettability with respect to an electrode assembly by using a liquid electrolyte in combination with the gel electrolyte, it may effectively reduce manufacturing time and manufacturing costs.

Furthermore, since the battery cell according to the present disclosure may replenish an insufficient lithium salt in the liquid electrolyte, which is reduced due to lithium precipitation or the like during charge and discharge, by allowing a first lithium salt of the gel electrolyte to move into the liquid electrolyte by a molarity gradient between the first lithium salt of the gel electrolyte and a second lithium salt of the liquid electrolyte, it may provide a lithium secondary battery and a battery module which have effectively improved cycle characteristics.

## BRIEF DESCRIPTION OF THE DRAWINGS

FIG. 1 is a plan view illustrating a battery cell according to an embodiment of the present disclosure.

FIG. 2 is an exploded perspective view illustrating an electrode assembly and a pouch of the battery cell according to the embodiment of the present disclosure.

FIG. 3 is an exploded perspective view illustrating a separator and electrodes according to an embodiment of the present disclosure.

FIG. 4 is a vertical cross-sectional view illustrating the inside of the battery cell according to the embodiment of the present disclosure.

FIG. 5 is a plan view illustrating the inside of the battery cell according to the embodiment of the present disclosure.

FIG. 6 is a front view illustrating a state in which a plurality of electrodes are inserted into an accommodation space of a pouch in a method of preparing a battery cell according to an embodiment of the present disclosure.

FIG. 7 is a front view illustrating the inside of the pouch in which a gel electrolyte composition is injected into the accommodation space in the method of preparing a battery cell according to the embodiment of the present disclosure.

FIG. 8 is a front view illustrating the inside of the pouch in which the gel electrolyte composition is thermally cured in the accommodation space in the method of preparing a battery cell according to the embodiment of the present disclosure.

FIG. 9 is a side view illustrating a state before fixing a battery cell using a fixing jig during the curing of the gel electrolyte composition in the method of preparing a battery cell according to the embodiment of the present disclosure.

FIG. 10 is a side view illustrating a state in which the battery cell is fixed using the fixing jig during the curing of the gel electrolyte composition in the method of preparing a battery cell according to the embodiment of the present disclosure.

FIG. 11 is a perspective view illustrating the inside of the pouch in which a liquid electrolyte is injected into the accommodation space in the method of preparing a battery cell according to the embodiment of the present disclosure.

FIG. 12 is a front view illustrating a state in which one side of the accommodation space of the pouch is additionally sealed in the method of preparing a battery cell according to the embodiment of the present disclosure.

FIG. 13 is a front view illustrating a state in which an injection space of the pouch is removed in the method of preparing a battery cell according to the embodiment of the present disclosure.

FIG. 14 is a perspective view schematically illustrating a battery module according to an embodiment of the present disclosure.

FIG. 15 is a partially enlarged view schematically illustrating region A of the battery cell of FIG. 4.

## MODE FOR CARRYING OUT THE INVENTION

Hereinafter, the present disclosure will be described in detail with reference to the drawings. In describing the present disclosure, when it is determined that a detailed description of a related known configuration or function may unnecessarily obscure the gist of the present disclosure, the detailed description thereof will be omitted.

In relation to descriptions of the drawings, like reference numerals may be used for similar components.

In the present disclosure, the expressions "have", "may have", "include", or "may include" refer to existence of a corresponding feature (e.g.: numeral, function, operation, or constituent element such as component), and do not exclude additional features.

In the present disclosure, the expressions "A or B", "at least one of A or/and B", or "one or more of A or/and B" may include all possible combinations of the items listed. For example, the expressions "A or B", "at least one of A and B", or "at least one of A or B" refer to all of (1) including at least one A, (2) including at least one B, or (3) including all of at least one A and at least one B.

As a result of a significant amount of research conducted into developing a battery cell with excellent performance and lifetime by preventing disconnection due to movement and deformation of an electrode tab, the present inventors have found that the disconnection of the electrode tab may be significantly prevented and cycle characteristics may be simultaneously improved by disposing a gel electrolyte with low fluidity around the electrode tab to surround the electrode tab and by disposing a liquid electrolyte with excellent wettability around an electrode assembly on which the gel electrolyte is not formed, thereby leading to the completion of the present disclosure. Furthermore, the present inventors have found that lifetime and performance of a battery may be effectively improved by improving impregnability of an electrolyte solution with respect to the electrode assembly by injecting a liquid electrolyte, in which viscosity is reduced by decreasing a concentration of a lithium salt, and by simultaneously replenishing the insufficient lithium salt in the liquid electrolyte, which is reduced during charge and discharge, by using the gel electrolyte containing a relatively high molarity of a lithium salt together, thereby leading to the completion of the present disclosure.

Specifically, a battery cell 100 according to the present disclosure includes a cell case 110, an electrode assembly 120, an electrode tab 121, a gel electrolyte 150 surrounding the electrode tab, and a liquid electrolyte 160.

Hereinafter, a configuration of the battery cell of the present disclosure will be described in detail.

### Battery Cell

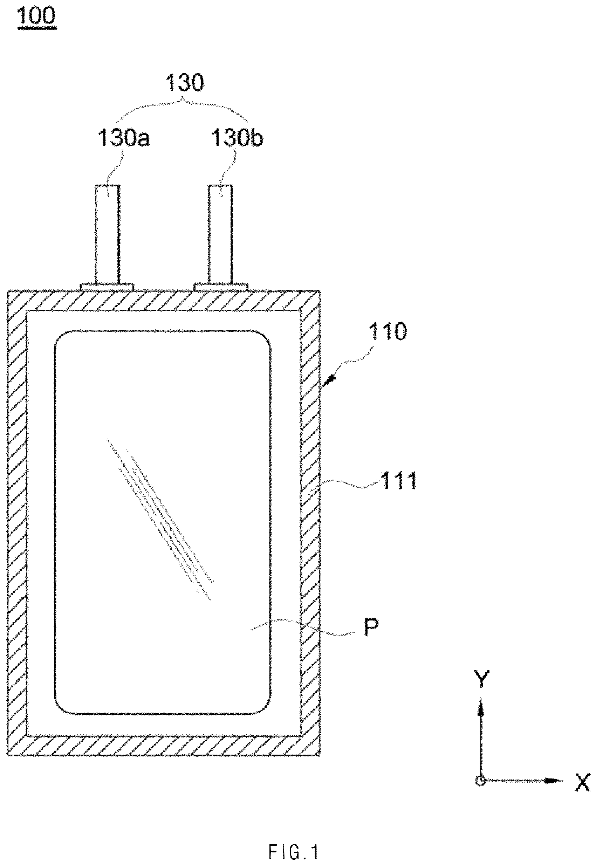

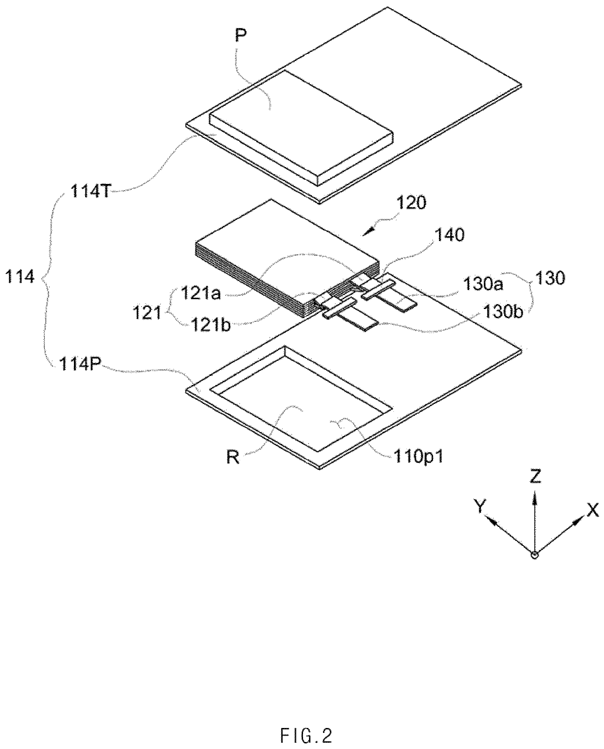

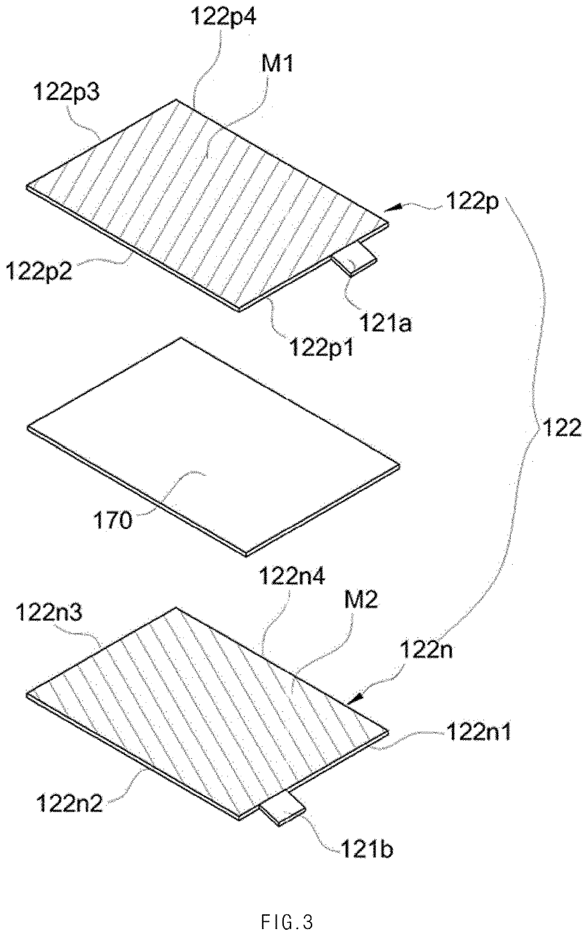

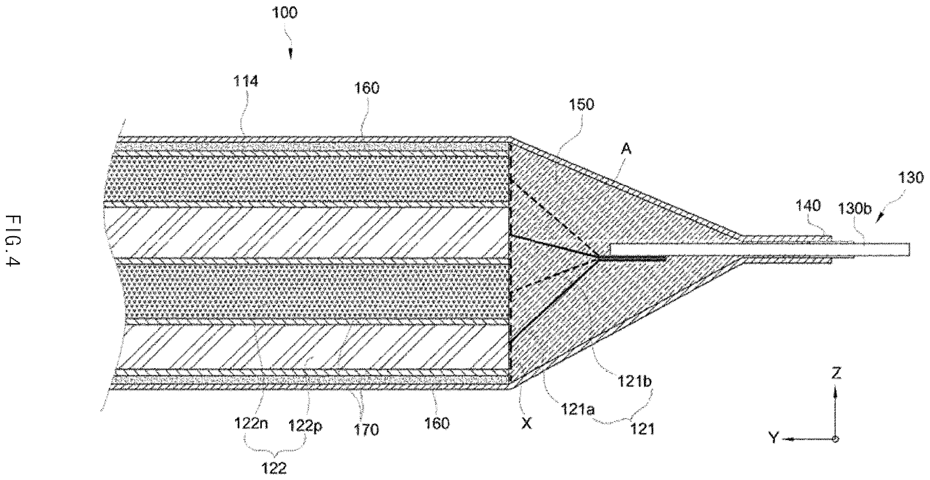

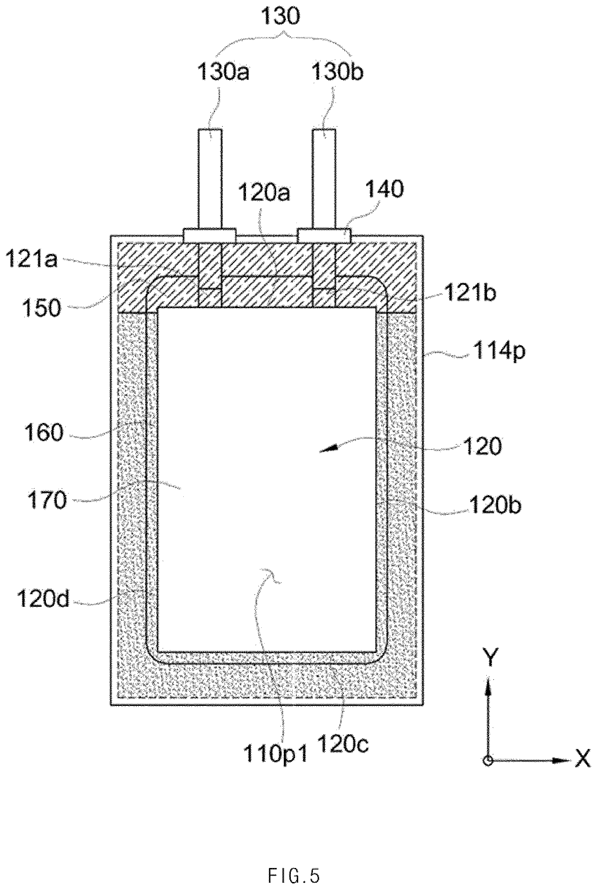

A plan view illustrating the battery cell 100 according to an embodiment of the present disclosure is illustrated in FIG. 1. An exploded perspective view illustrating the electrode assembly 120 and a pouch of the battery cell 100 according to the embodiment of the present disclosure is illustrated in FIG. 2. An exploded perspective view illustrating a separator 170 and electrodes 122p and 122n according to an embodiment of the present disclosure is illustrated in FIG. 3. A vertical cross-sectional view illustrating the inside of the battery cell 100 according to the embodiment of the present disclosure is illustrated in FIG. 4. A plan view illustrating the inside of the battery cell 100 according to the embodiment of the present disclosure is illustrated in FIG. 5. For reference, for convenience of explanation, the gel electrolyte 150 and the liquid electrolyte 160 are omitted in FIG. 2, and a state, in which a first cell sheet 114T of the battery cell 100 is removed, is illustrated in FIG. 5.

First, referring to FIGS. 1 and 2, the battery cell 100 of the present disclosure includes the cell case 110, a sealing portion 111 heat-fused to an outer circumferential portion, and an electrode lead portion 130 including a positive electrode lead 130a and a negative electrode lead 130b which protrude outside the cell case, wherein a portion of the cell case may include a portion P that convexly protrudes outward such that the electrode assembly (not shown) may be accommodated.

The cell case 110 may be a pouch-type case formed of a flexible material. Specifically, the cell case 110, as shown in FIG. 2, may include the first cell sheet 114T covering an upper portion of the electrode assembly 120 and a second cell sheet 114P which is joined to a portion of a lower surface of the first cell sheet 114T and covers a lower portion of the electrode assembly 120. In this case, each of the first cell sheet 114T and the second cell sheet 114P may be a laminate sheet. Specifically, the laminate sheet may have a structure in which a thin metal film (e.g., aluminum (Al) film) is laminated between a water-resistant polymer film (nylon) and a thermal bonding polymer film (e.g.: Casted Polypropylene). Since the structure of the laminate sheet and materials constituting each layer are widely known in the art to which the present disclosure pertains, a detailed description thereof will be omitted.

Portions of each of the first cell sheet 114T and the second cell sheet 114P may be heat-fused to each other to seal the cell case 110. The heat fusion method may include a step of pressurizing at least a portion of each of the outer circumferential portions facing each other, in a state in which the first cell sheet 114T and the second cell sheet 114P are stacked, with a high-temperature apparatus (e.g.: hot press). In this case, a heat fusion temperature may be in a range of 110°C to 150°C. As shown in FIG. 1, in the cell case 110, the heat-fused sealing portion 111 may be formed on the outer circumferential portion by the heat fusion.

Referring to FIGS. 2 to 5, the cell case 110 may include an accommodation space 110p1 accommodating the electrode assembly 120, the electrode tab 121, the gel electrolyte 150, and the liquid electrolyte 160. The accommodation space 110p1 may be a portion which is deformed into a cup shape by pressing a portion of at least one of the two cell sheets 114T and 114P with a high-temperature hot press. The accommodation space 110p1 may be the portion P in which the portion of each of the cell sheets 114T and 114P convexly protrudes outward. The accommodation space 110p1 of the cell case 110 may have a size large enough to accommodate all of a plurality of electrodes 122, the separator 170, the gel electrolyte 150, and the liquid electrolyte 160. For example, as shown in FIG. 2, the accommodation space 110p1 of the cell case 110 may be formed by joining the portion P convexly protruding in an upward direction of the first cell sheet 114T and a portion R formed concavely in a downward direction of the second cell sheet 114P to each other.

The electrode assembly 120 is an electrode assembly having a structure in which a positive electrode, a negative electrode, and a separator disposed between the positive electrode and the negative electrode are sequentially stacked.

A structure, in which the pouch and the electrode assembly 120 of the battery cell 100 according to the present disclosure are separated, is illustrated in FIG. 2, and a structure, in which the separator 170 and the electrodes 122, that is, the positive electrode 122p and the negative electrode 122n, of the electrode assembly 120 according to the present disclosure are separated, is illustrated in FIG. 3.

As shown in FIG. 3, the electrodes 122 may include at least one positive electrode 122p and at least one negative electrode 122n depending on electrical polarity.

The positive electrode 122p has a structure in which a positive electrode active material layer is formed on a current collector (not shown). In this case, the positive electrode active material layer may include a positive electrode active material and optionally a conductive agent and a binder. For example, the positive electrode 122p may be formed by applying a mixture of the positive electrode active material, the conductive agent, and the binder to the current collector formed of an aluminum alloy foil material.

Also, the negative electrode 122n has a structure in which a negative electrode active material layer is formed on a current collector (not shown). In this case, the negative electrode active material layer may include a negative electrode active material and optionally a conductive agent and a binder. For example, the negative electrode 122n may be formed by applying a mixture of the negative electrode active material, the conductive agent, and the binder to the current collector formed of a copper alloy foil material.

Any known materials used in a lithium secondary battery may be used as the positive electrode active material, the negative electrode active material, the binders, and the conductive agents.

The separator 170 may be disposed between the positive electrode 122p and the negative electrode 122n. The separator 170 may play a role in blocking an internal short circuit between the positive electrode 122p and the negative electrode 122n and impregnating the electrolyte. Any separator material may be used as the separator 170 of the present disclosure without particular limitation as long as it is commonly used in a secondary battery. For example, the separator 170 may include at least one material of polyethylene and polypropylene. Then, the electrode assembly 120 as shown in FIG. 2 may be formed by sequentially stacking the positive electrode 122p, the separator 170, and the negative electrode 122n.

The electrode tab 121, as a path through which electrons may move, may be bonded to the electrode collector.

The mixture of the electrode active material, the conductive agent, and the binder may not be applied to the electrode tab 121. That is, the electrode tab 121 may be formed by cutting an uncoated portion of the electrode collector which is not coated with the electrode active material, or may be separately formed by connecting a separate conductive member to the uncoated portion of the electrode collector by ultrasonic welding or the like.

At least one electrode tab 121 may be included in each of the positive electrode and the negative electrode.

For example, as shown in FIG. 3, a positive electrode tab 121a and a negative electrode tab 121b, which protrude from a first side 122n1, may be included in the positive electrode 122p and the negative electrode 122n, respectively. However, the present disclosure is not necessarily limited thereto. For example, the positive electrode tab 121a and the negative electrode tab 121b may be formed on at least one of a first side, a second side, a third side, and a fourth side of the electrode 122 in each of forward, backward, left, and right directions. For example, in a case in which the positive electrode 122p has a rectangular shape in plan view, the positive electrode tab 121a may be formed on at least one of a first side 122p1, a second side 122p2, a third side 122p3, and a fourth side 122p4. In addition, in a case in which the negative electrode 122n has a rectangular shape in plan view, the negative electrode tab 121b may be formed on at least one of the first side 122n1, a second side 122n2, a third side 122n3, and a fourth side 122n4.

The battery cell 100 according to the embodiment of the present disclosure may further include an electrode lead 130 bonded to a portion of the electrode tab 121 as shown in FIG. 2. The electrode lead 130 may be an electrically conductive metal. Referring to FIG. 2, the electrode lead 130 may include the positive electrode lead 130a connected to the positive electrode tab 121a and the negative electrode lead 130b connected to the negative electrode tab 121b. The electrode lead 130 may be connected to one or more electrode tabs 121 in various ways, such as welding. A portion of the electrode lead 130 may be disposed to be exposed to the outside of the cell case 110. That is, the electrode lead 130 acts as an electrode terminal of the battery cell 100. For example, the positive electrode lead 130a may act as a positive electrode terminal of the battery cell 100, and the negative electrode lead 130b may act as a negative electrode terminal of the battery cell 100. The battery cell 100 may include an insulating film 140 configured to surround a portion of an outer surface of the electrode lead 130. The insulating film 140 may be configured to electrically insulate between the cell case 110 and the electrode lead 130 and to be heat-fused to the cell case 110.

Referring to FIGS. 4 and 5, the battery cell of the present disclosure may include the gel electrolyte 150 with low fluidity disposed to surround the electrode tab 121 around the electrode tab 121 including the positive electrode tab 121a and the negative electrode tab 121b.

The gel electrolyte 150 means an electrolyte having a gel phase. Herein, the gel phase may be phenomenologically defined as a soft semi-solid material containing at least one liquid, and means maintenance of a predetermined shape without flow in a steady state due to high viscosity.

The gel electrolyte 150 may include a curable compound capable of curing the electrolyte to such an extent that the electrolyte exhibits a gel phase, and may further include an organic solvent and a first lithium salt.

The gel electrolyte 150 is mostly a liquid material by weight ratio and may partially include a solid material. For example, the gel electrolyte 150 may be prepared by thermal curing or ultraviolet curing the curable compound mixed in a liquid-type electrolyte to be phase-changed into a gel-state electrolyte.

The gel electrolyte 150 may be disposed on one side of the electrode assembly 120, on which the electrode tab 121 is disposed, in the accommodation space 110p1 in order to prevent movement of the electrode tab 121 due to an external impact of the battery cell 100. That is, the gel electrolyte 150 may surround an outer surface of the electrode tab 121 to suppress the movement and deformation of the electrode tab 121.

For example, as shown in FIG. 4, the gel electrolyte 150 may be disposed between an inner surface of the accommodation space 110p1 and a first side 120a of the electrode assembly 120 on which the electrode tab 121 is disposed. In this case, the gel electrolyte 150 may surround the outer surface of each of the positive electrode tab 121a and the negative electrode tab 121b to prevent the movement of each of the positive electrode tab 121a and the negative electrode tab 121b. However, the present disclosure is not necessarily limited thereto. For example, in a case in which the electrode tab 121 is disposed on at least one of the first side 120a, a second side 120b, a third side 120c, and a fourth side 120d of the electrode assembly 120, the gel electrolyte 150 may be disposed at least one of the first side 120a, the second side 120b, the third side 120c, and the fourth side 120d of the electrode assembly 120 on which the electrode tab 121 is disposed. Also, the gel electrolyte 150 may surround the outer surface of the electrode tab 121. Particularly, the gel electrolyte 150 may surround a bonding portion between the electrode tab 121 and the electrode lead 130.

The gel electrolyte 150 is not necessarily disposed only on one side on which the electrode tab 121 is formed, but the gel electrolyte 150 may also be disposed on the other side of the electrode assembly 120 on which the electrode tab 121 is not disposed. For example, with respect to FIG. 5, the gel electrolyte 150 may be disposed in a portion of a space between the cell case 110 and the electrode assembly 120 of each of the second side 120b and the fourth side 120d of the electrode assembly 120 on which the electrode tab 121 is not disposed.

According to the configuration of the present disclosure, with respect to the battery cell 100, when compared to a case where the liquid electrolyte 160 of the battery cell 100 of the related art surrounds the electrode tab 121, in a case in which an external impact is applied to the battery cell 100, since the gel electrolyte 150 surrounds the electrode tab 121, the gel electrolyte 150 prevents the movement of the electrode tab 121, and thus, disconnection of a connection portion between the electrode tab 121 and the electrode 122 or a bent portion of the electrode tab 121 due to the frequent movement of the electrode tab 121 may be prevented.

That is, in a case in which the battery cell 100 of the present disclosure is mounted in a vehicle, since the disconnection of the electrode tab 121 may be prevented by minimizing the movement and deformation of the electrode tab 121 by the semi-solid gel electrolyte 150 even if frequent impact and vibration generated during movement are transmitted to the battery cell 100, and, accordingly, since deactivation of electrical charge and discharge of the electrode 122 may be prevented, lifetime of the battery cell 100 may be effectively increased.

Also, as shown in FIG. 4, the battery cell 100 of the present disclosure may include the liquid electrolyte 160.

The liquid electrolyte 160 may be accommodated adjacent to the inside of the cell case 110 so as to be in contact with the gel electrolyte 150. In this case, an interface X may be formed between the gel electrolyte 150 and the liquid electrolyte 160. The battery cell 100 of the present disclosure may be configured such that the first lithium salt of the gel electrolyte 150 may move into the liquid electrolyte 160 through the interface X between the gel electrolyte 150 and the liquid electrolyte 160. That is, since the battery cell 100 of the present disclosure is configured such that a relatively high concentration of the first lithium salt of the gel electrolyte 150 may move into the liquid electrolyte 160 through the interface X between the gel electrolyte 150 and the liquid electrolyte 160, depletion of a lithium salt in the liquid electrolyte 160 containing a relatively low molarity of the lithium salt may be prevented even if the battery cell 100 is charged and discharged many times, and thus, the lifetime of the battery cell 100 may be effectively increased.

Referring to FIGS. 4 and 5, the liquid electrolyte 160 may be accommodated in the accommodation space 110p1 to surround a region in which the gel electrolyte 150 is not formed, for example, at least one other side of the electrode assembly 120 on which the electrode tab 121 is not disposed. In a case in which the electrode tab 121 is disposed on the first side 120a of the electrode assembly 120, the liquid electrolyte 160 may be disposed on any one of the remaining second side 120b, third side 120c, and fourth side 120d of the electrode assembly 120 on which the electrode tab 121 is not formed, and it is desirable that the liquid electrolyte 160 effectively prevents a decrease in lifetime of the battery cell 100 by being disposed on as many sides as possible such that an amount of the liquid electrolyte 160, which may be replenished in preparation for consumption of the liquid electrolyte 160, is large. For example, as shown in FIG. 5, in a case in which the electrode tab 121 is disposed on the first side 120a of the electrode assembly 120, the liquid electrolyte 160 may be disposed to surround the remaining second side 120b, third side 120c, and fourth side 120d of the electrode assembly 120.

According to the configuration of the present disclosure, in a case in which the liquid electrolyte 160 disposed between the electrodes 122 is consumed during charge and discharge of the battery cell 100, the liquid electrolyte 160 disposed on at least one other side of the electrodes 122, on which the electrode tabs 121 is not formed, may move between the electrodes 122 to replenish the liquid electrolyte 160. Thus, the decrease in lifetime of the battery cell 100 may be reduced even if the liquid electrolyte 160 between the electrodes 122 is consumed after charging and discharging the battery cell 100 many times.

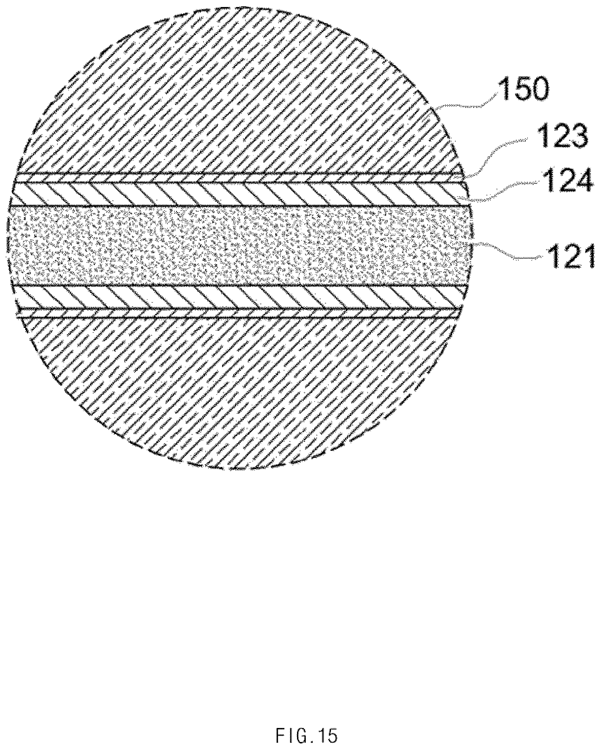

As shown in FIG. 15, an insoluble passivation layer 123, which is formed by a reaction of lithium salt anions contained in the gel electrolyte 150 and cations of the electrode tab 121, may be formed on a metal surface of the electrode tab 121. The passivation layer 123 may effectively suppress the disconnection of the electrode tab 121 by suppressing a reduction reaction on the surface of the electrode tab to prevent corrosion and by minimizing the damage of the electrode tab 121 due to the external impact.

Also, the battery cell 100 according to the embodiment of the present disclosure may perform charge and discharge through ion exchange between the positive electrode 122p and the negative electrode 122n through the liquid electrolyte 160. The liquid electrolyte 160 may be disposed between the positive electrode 122p and the negative electrode 122n to allow ions to move between the positive electrode 122p and the negative electrode 122n. The liquid electrolyte 160 may be absorbed by each of the positive electrode 122p and the negative electrode 122n. The liquid electrolyte 160 may be disposed on pores and a surface of the separator 170. For example, in a case in which the battery cell 100 is a lithium secondary battery, a non-aqueous electrolyte solution may be typically used.

Next, each component of the gel electrolyte 150 and the liquid electrolyte 160, which are included in the battery cell of the present disclosure, will be described in more detail.

### (1) Gel Electrolyte

The gel electrolyte 150 of the present disclosure may be formed by injecting a gel electrolyte composition 155 including a curable compound, a first lithium salt, an organic solvent, and a polymerization initiator into the accommodation space 110p1 and then performing thermal polymerization.

In this case, the curable compound is not particularly limited as long as it is a compound which may be changed into a gel phase while forming cross-links by a polymerization reaction used in the preparation of a conventional gel electrolyte, because it has a polymerizable functional group selected from the group consisting of a vinyl group, an epoxy group, an allyl group, and a (meth)acrylic group in which a polymerization reaction may occur in its structure.

Specifically, the curable compound may be at least one selected from a polymerizable monomer, an oligomer, and a copolymer.

The polymerizable monomer may include a thermopolymerizable monomer or an ultraviolet curable acrylate monomer.

Representative examples of the thermopolymerizable monomer may be at least one of tetraethylene glycol diacrylate, polyethylene glycol diacrylate (molecular weight of 50 to 20,000), 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate, and these monomers may be used alone or in a mixture of two or more thereof.

Also, the ultraviolet curable acrylate monomer may include at least one of ODA (octyl/decyl acrylate), IDA (isodecyl acrylate), LA (lauryl acrylate), SA (stearyl acrylate), PEA (phenoxyethyl acrylate), MNPEOA (nonyl phenol ethoxylate monoacrylate), tetrahydrofurfuryl acrylate, cyclohexyl acrylate, 4-butylcyclohexyl acrylate, dicyclopentenyl acrylate, dicyclopentenyl oxyethyl acrylate, 4-HBA (4-hydroxybutyl acrylate), and phenoxyethyl acrylate. Furthermore, the oligomer may include at least one selected from the group consisting of a fluorine-based oligomer, a polyether-based oligomer, a polycarbonate-based oligomer, an acrylate-based oligomer, a polysiloxane-based oligomer, a phosphazene-based oligomer, a polyethylene-based oligomer, an urethane-based oligomer, an epoxy-based oligomer, polyethylene oxide, polyester sulfide, polyvinyl alcohol, and polyvinylidene fluoride, and may specifically include at least one selected from a fluorine-based oligomer, a polycarbonate-based oligomer, and a polysiloxane-based oligomer. The copolymer may include at least one selected from the group consisting of an allyl 1,1,2,2-tetrafluoroethyl ether (TFE)-(2,2,2-trifluoro ethyl acrylate) copolymer, a TFE-vinyl acetate copolymer, a TFE-(2-vinyl-1,3-dioxolane) copolymer, a TFE-vinyl methacrylate copolymer, a TFE-methyl acrylate copolymer, a TFE-methyl methacrylate (MMA) copolymer, and a TFE-2,2,2-trifluoroethyl acrylate copolymer.

The curable compound may be present in an amount of about 3 wt% to about 30 wt%, preferably about 3 wt% to about 25 wt%, and more preferably about 3 wt% to about 10 wt%, specifically, 5 wt% to 7 wt% based on a total weight of the gel electrolyte composition.

In a case in which the amount of the curable compound is less than 3 wt% based on the total weight of the gel electrolyte composition 155, it is difficult for the electrolyte to form a gel phase even if the curable compound is cured. Also, in a case in which the amount of the curable compound is greater than 30 wt% based on the total weight of the gel electrolyte composition 155, since viscosity of the gel electrolyte composition 155 is increased to reduce fluidity of the gel electrolyte composition 155 when the gel electrolyte composition 155 is injected into the accommodation space of the battery cell 100, it may not be easy to move the gel electrolyte composition 155 into the accommodation space 110p1 around the electrode tab 121 and some of the gel electrolyte composition 155 may remain between the electrodes 122 during the movement. Since the gel electrolyte composition 155 remaining between the electrodes 122 has higher ionic conduction resistance than the liquid electrolyte 160, it may negatively affect performance of the battery cell 100 (e.g., an increase in internal resistance of the battery). Thus, in a case in which the amount of the curable compound in the gel electrolyte composition 155 satisfies the above range, viscosity, which facilitates the injection of the gel electrolyte composition into the accommodation space, may be secured.

The first lithium salt is not particularly limited as long as it contains anions capable of suppressing occurrence of the reduction reaction on the surface of the electrode tab by forming the insoluble passivation layer on the metal surface of the electrode tab, wherein the first lithium salt may specifically include at least one of $LiPF_6$, LiCl, LiBr, LiI, $LiBF_4$, $LiClO_4$, $LiB_{10}Cl_{10}$, $LiAlCl_4$, $LiAlO_4$, $LiCF_3SO_3$, $LiCH_3CO_2$, $LiCF_3CO_2$, $LiAsF_6$, $LiSbF_6$, and $LiCH_3SO_3$, and may preferably include one of $LiPF_6$ and $LiBF_4$.

Specifically, in a case in which the first lithium salt is one of $LiPF_6$ and $LiBF_4$, a first anion may be $F^-$, and the first anion ($F^-$) and a cation ($Al^{3+}$) of the electrode tab 121 are combined to form an aluminum's natural oxide layer 124 ($Al_2O_3$) on the surface of the electrode tab 121 including aluminum as in FIG. 15, and the passivation layer 123 may be formed on the aluminum's natural oxide layer. The passivation layer 123 may include at least one of $AlF_3$ and LiF.

In a case in which lithium bis(fluorosulfonyl)imide (LiFSI) or lithium bis (trifluoromethanesulfonyl) imide (LiTFSI) is used as the first lithium salt, it reacts with the aluminum metal surface of the electrode tab to form $Al(FSI)_3$ $(Al((FSO_2)_2N)_3)$ on the surface of the electrode tab, and, since this reactant is soluble in an electrolyte solvent, it may cause corrosion of the electrode tab while being dissolved in the electrolyte solvent. Accordingly, in the present disclosure, since $LiPF_6$ and $LiBF_4$ are used as the first lithium salt to produce $AlF_3$ or LiF, which is less soluble (or insoluble) in the solvent of the electrolyte, ahead of $Al(FSI)_3$ and to form the passivation layer 123 on the aluminum metal surface of the electrode tab, a corrosion reaction of the aluminum metal of the electrode tab may be suppressed.

However, $LiPF_6$ and $LiBF_4$ are disadvantageous in that they have lower ionic conductivity and thermal stability than lithium bis(fluorosulfonyl)imide (LiFSI), lithium bis(trifluoromethanesulfonyl)imide (LiTFSI), or lithium bis(oxalato) borate (LiBOB). However, since the liquid electrolyte 160 with high ionic conductivity and thermal stability is used together as will be described later, the battery cell 100 of the present disclosure may improve disadvantages, such as low ionic conductivity and thermal stability, caused by $LiPF_6$ and $LiBF_4$.

A first molarity of the first lithium salt may be in a range of 0.6 M to 5.0 M.

Herein, the first molarity means that an amount of a solute dissolved in 1 liter of a solution is expressed in moles. Since the electrolyte has appropriate conductivity and viscosity when the molarity of the first lithium salt is included in the above range, excellent electrolyte performance may be exhibited and lithium ions may move effectively.

In a case in which the first molarity of the first lithium salt of the gel electrolyte 150 is less than 0.2 M, the lifetime of the battery cell 100 may not be effectively increased due to the excessively low concentration of the first lithium salt. Also, in a case in which the first molarity of the first lithium salt of the gel electrolyte 150 is greater than 5.0 M, since the fluidity of the gel electrolyte composition is reduced as the viscosity of the gel electrolyte composition is increased due to the excessive use of the lithium salt, it is not easy to move the gel electrolyte composition into the accommodation space around the electrode tab such that the gel electrolyte may not be completely filled in a space of a tab portion and the liquid electrolyte penetrates, and thus, tab disconnection and degradation of life performance may occur.

Specifically, the first molarity of the first lithium salt may be in a range of 0.9 M to 4.0 M, specifically, 1.0 M to 3.0 M.

The organic solvent is not particularly limited as long as it is an organic solvent used in an electrolyte for a secondary battery, wherein the organic solvent may specifically be at least one selected from the group consisting of propylene carbonate (PC), ethylene carbonate (EC), diethyl carbonate (DEC), vinylene carbonate (VC), dimethyl carbonate (DMC), dipropyl carbonate (DPC), dimethylsulfoxide, acetonitrile, dimethoxyethane, diethoxyethane, tetrahydrofuran, N-methyl-2-pyrrolidone (NMP), ethylmethylcarbonate (EMC), and gamma butyrolactone ($\gamma$-butyrolactone). However, the organic solvent is not necessarily limited to the above-listed components, but similar effects may be obtained even when known components and equivalents thereof are used. All of the remainder of the gel electrolyte composition of the present disclosure except for the curable compound, the lithium salt, and the polymerization initiator may be the organic solvent unless otherwise specified.

Also, a conventional thermal polymerization initiator or photopolymerization initiator known in the art may be used as the polymerization initiator depending on a type of the curable compound.

Specifically, in a case in which the thermopolymerizable monomer is used as the curable compound, a thermal polymerization initiator may be used as the polymerization initiator. Also, in a case in which the ultraviolet curable acrylate monomer is used as the curable compound, a photopolymerization initiator may be used as the polymerization initiator.

The thermal polymerization initiator forms a radical by being dissociated by heat, and may react with the polymerizable monomer, the oligomer, or the copolymer by free radical polymerization to gelate the gel electrolyte composition. Specifically, non-limiting examples of the thermal polymerization initiator may include organic peroxides or hydroperoxides, such as benzoyl peroxide, acetyl peroxide, dilauryl peroxide, di-tert-butyl peroxide, t-butyl peroxy-2-ethyl-hexanoate, cumyl hydroperoxide, and hydrogen peroxide, and azo compounds such as 2,2'-azobis(2-cyanobutane), 2,2'-azobis(methylbutyronitrile), 2,2'-azobis(iso-butyronitrile) (AIBN), and 2,2'-azobisdimethylvaleronitrile (AMVN).

The thermal polymerization initiator forms a radical by being dissociated by heat, for a non-limiting example, heat at 30°C to 100°C in the battery or by being dissociated at room temperature (5°C to 30°C), and the polymerizable monomer may react with an acrylate-based compound by free radical polymerization to form the gel electrolyte 150.

The photopolymerization initiator forms a radical by being dissociated by light, and may react with the polymerizable monomer, the oligomer, or the copolymer by free radical polymerization to gelate the gel electrolyte composition. Specifically, non-limiting examples of the photopolymerization initiator may include at least one of ethylbenzoin ether, isopropylbenzoin ether, $\alpha$-methylbenzoin ethyl ether, benzoin phenyl ether, $\alpha$-acyloxime ester, 1,1-dichloroacetophenone, 2-hydroxy-2-methyl-1-phenylpropan-1-one, 1-hydroxycyclohexylphenyl ketone, anthraquinone, 2-anthraquinone, 2-chloroanthraquinone, thioxanthone, isopropyl thioxanthone, chlorothioxanthone, benzophenone, benzyl benzoate, and benzoyl benzoate.

The polymerization initiator may be included in an amount of 0.01 part by weight to 20 parts by weight, specifically, 0.1 part by weight to 10 parts by weight based on 100 parts by weight of the curable compound. In a case in which the amount of the polymerization initiator is in a range of 0.01 part by weight to 20 parts by weight, properties of the gel electrolyte 150 may be secured by increasing a conversion rate of the curable compound.

Before the formation of the gel electrolyte 150, it is desirable that the gel electrolyte composition has a viscosity of about 3 cP to about 100 cP, particularly 6 cP to 10 cP, and more particularly 6 cP to 7 cP so as to facilitate the injection into the accommodation space 110p1.

In a case in which the viscosity of the gel electrolyte composition 155 is less than 3 cP, the disconnection of the electrode tab 121 may occur due to the occurrence of the movement of the electrode tab 121, and, in contrast, in a case in which the viscosity of the gel electrolyte composition 155 is greater than 100 cP, since the fluidity of the gel electrolyte 150 is reduced, it is not only not easy to move the gel electrolyte composition into the accommodation space around the electrode tab, but manufacturing costs of the battery cell 100 may also be increased due to an increase in the amount of the curable compound and first lithium salt used.

Also, after the formation of the gel electrolyte 150, the cured gel electrolyte may have a viscosity of about 10,000 cP to about 30,000 cP, specifically, 20,000 cP, wherein the cured gel electrolyte may have little fluidity.

In the present disclosure, in a case in which the viscosity of the gel electrolyte 150 satisfies the above range, even if the frequent impact and vibration generated during movement are transmitted to the battery cell 100, the movement and deformation of the electrode tab 121 may be minimized by the electrolyte 150 having higher viscosity than the liquid electrolyte 160.

As described above, in the present disclosure, the viscosity of the gel electrolyte 150 may be controlled such that the gel electrolyte 150 has appropriate viscosity capable of preventing the movement and deformation of the electrode tab 121 by adjusting the amount of each of the first molarity of the first lithium salt and the cured polymer. As a result, the deformation of the electrode tab 121 may be reduced even in a case where an external impact is applied to the battery cell 100. Thus, even in a case where the battery cell 100 of the present disclosure is mounted in a vehicle, the movement and deformation of the electrode tab 121 may be minimized by the electrolyte 150 having higher viscosity than the liquid electrolyte 160 even if the frequent impact and vibration generated during movement are transmitted to the battery cell 100.

**(2) Liquid Electrolyte**

In the present disclosure, the liquid electrolyte includes a second lithium salt and an organic solvent, and may optionally further include an additive.

A molarity of the second lithium salt of the liquid electrolyte may be in a range of about 0.5 M to about 2.0 M.

In a case in which the second molarity of the second lithium salt of the liquid electrolyte 160 is less than 0.5 M, since lithium ion conductivity is reduced, internal resistance of the battery cell is increased and the lifetime of the battery cell 100 may be reduced. Also, in a case in which the second molarity of the second lithium salt is greater than 2.0 M, since an amount of the second lithium salt used is increased more than necessary to increase viscosity of the liquid electrolyte 160, wettability of the liquid electrolyte 160 with respect to the electrode assembly 120 may be deteriorated and the manufacturing costs of the battery cell may be increased.

The molarity of the second lithium salt of the liquid electrolyte may be in a range of about 0.75 M to about 1.8 M, specifically, about 0.8 M to about 1.5 M.

Particularly, in the present disclosure, it is desirable for the liquid electrolyte to include the second molarity, which is lower than the first molarity of the first lithium salt of the gel electrolyte, of the second lithium salt so as to form a concentration gradient. Specifically, it is desirable that the second molarity of the second lithium salt is lower than the first molarity of the first lithium salt by 0.1 M or more.

In the present disclosure, since an appropriate concentration gradient of the lithium salts of each of the gel electrolyte 150 and the liquid electrolyte 160 may be formed by setting the second molarity of the second lithium salt of the liquid electrolyte 160 lower than the first molarity of the first lithium salt of the gel electrolyte 150 by 0.1 M or more, the first lithium salt of the gel electrolyte 150 may move into the liquid electrolyte 160 through the interface X between the gel electrolyte 150 and the liquid electrolyte 160. In a case in which the second molarity of the second lithium salt of the liquid electrolyte 160 is lower than the first molarity of the first lithium salt of the gel electrolyte 150 by less than 0.1 M, since an amount of the first lithium salt of the gel electrolyte 150, which moves into the liquid electrolyte 160, is small, an effect of improving the lifetime of the battery cell 100 may be insignificant.

Specifically, in the battery cell 100 according to the embodiment of the present disclosure, the first molarity of the first lithium salt of the gel electrolyte 150 is in a range of 0.6 M to 5.0 M and the second molarity of the second lithium salt of the liquid electrolyte 160 is in a range of 0.5 M to 2.0 M, but the second molarity of the second lithium salt may be lower than the first molarity of the first lithium salt by 0.1 M or more. Preferably, the second molarity of the second lithium salt of the liquid electrolyte 160 may be in a range of 0.75 M to 1.8 M, and may more preferably be in a range of 0.8 M to 1.5 M. As described above, since the appropriate concentration gradient of the lithium salts of each of the gel electrolyte 150 and the liquid electrolyte 160 may be formed by setting the second molarity of the second lithium salt lower than the first molarity of the first lithium salt by 0.1 M or more, the first lithium salt of the gel electrolyte 150 may move into the liquid electrolyte 160.

Also, in the battery cell 100 according to the embodiment of the present disclosure, a ratio of the second molarity of the second lithium salt to the molarity of the first lithium salt may be in a range of 1:1.3 to 1:5. Preferably, the ratio of the second molarity of the second lithium salt to the molarity of the first lithium salt may be in a range of 1:1.3 to 1:5. More preferably, the ratio of the second molarity of the second lithium salt to the molarity of the first lithium salt may be in a range of 1:1.4 to 1:5.

In the present disclosure, since the appropriate concentration gradient of the lithium salts of each of the gel electrolyte 150 and the liquid electrolyte 160 may be formed as the ratio of the second molarity of the second lithium salt to the molarity of the first lithium salt is included in the above range, the first lithium salt of the gel electrolyte 150 may move into the liquid electrolyte 160 through the interface X.

In a case in which the ratio of the second molarity of the second lithium salt to the molarity of the first lithium salt is less than 1:1.3, since it is difficult to have an appropriate concentration gradient, the amount of the first lithium salt of the gel electrolyte 150, which moves into the liquid electrolyte 160, is small, and thus, the effect of improving the lifetime of the battery cell 100 may be insignificant. Also, in a case in which the ratio of the second molarity of the second lithium salt to the molarity of the first lithium salt is greater than 1:5, since an amount of the used first lithium salt of the gel electrolyte 150 is unnecessarily increased, the injection of the gel electrolyte composition is not only difficult, but the manufacturing costs of the battery cell 100 may also be increased.

As a representative example, the second lithium salt may include a single material selected from the group consisting of $LiPF_6$, $LiCl$, $LiBr$, $LiI$, $LiBF_4$, $LiClO_4$, $LiB_{10}Cl_{10}$, $LiAlCl_4$, $LiAlO_4$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (bis (fluorosulfonyl) imide, LiFSI), $LiN(SO_2CF_3)_2$ (lithium (bis)trifluoromethanesulfonimide, LiTFSI), $LiB(C_2O_4)_2$ (lithium bis(oxalato)borate, LiBOB), and $LiN(SO_2CF_2CF_3)_2$ (lithium bisperfluoroethanesulfonimide, LiBETI), or a mixture of two or more thereof, and may include a lithium salt of the same or different type from the first lithium salt. Specifically, the second lithium salt may include at least one of $LiPF_6$, LiFSI, LiTFSI, $LiBOB_2$, and LiBETI. Preferably, the second lithium salt may have relatively higher metal oxidizing power than the first lithium salt, but may have relatively higher ionic conductivity to reduce internal electrical resistance, and, in order to increase thermal stability when the battery cell is exposed to a high-temperature environment, at least one of LiFSI, LiTFSI, $LiBOB_2$, and LiBETI, which are different from the first lithium salt, may be used in combination with $LiPF_6$.

When $LiPF_6$ and at least one of LiFSI, LiTFSI, $LiBOB_2$, and LiBETI are used together as the second lithium salt, a molarity ratio of $LiPF_6$ to the other lithium salts other than $LiPF_6$ may be in a range of 1:1 to 1:6.7, specifically, 1:1 to 1:4. That is, in a case in which the molarity of $LiPF_6$ is higher than the molarity of the lithium salts other than $LiPF_6$, since the ionic conductivity of the liquid electrolyte 160 may be reduced, the internal resistance of the battery cell 100 may be relatively increased. In contrast, in a case in which the molarity ratio of the other lithium salts other than $LiPF_6$ to $LiPF_6$ is greater than 6.7, the manufacturing costs of the battery cell may be increased. Accordingly, since the battery cell 100 according to the present disclosure is configured such that the molarity ratio of the second lithium salt to the third lithium salt is in a range of 1:1 to 1:6.7, an amount of the relatively inexpensive $LiPF_6$ used is increased while reducing an increase in internal electrical resistance of the battery cell 100, and thus, there is an advantage in that the manufacturing costs of the battery cell 100 may be reduced.

The organic solvent included in the liquid electrolyte may be the same as or different from the organic solvent used in the gel electrolyte, and may specifically be at least one selected from the group consisting of propylene carbonate (PC), ethylene carbonate (EC), diethyl carbonate (DEC), vinylene carbonate (VC), dimethyl carbonate (DMC), dipropyl carbonate (DPC), dimethylsulfoxide, acetonitrile, dimethoxyethane, diethoxyethane, tetrahydrofuran, N-methyl-2-pyrrolidone (NMP), ethylmethylcarbonate (EMC), and gamma butyrolactone ($\gamma$-butyrolactone). The organic solvent is not necessarily limited to the above-listed components, but similar effects may be obtained even when known components and equivalents thereof are used.

Also, the liquid electrolyte may further include an additive, if necessary, in order to further improve high rate discharge characteristics of the battery, high-temperature stability, overcharge prevention, and an effect of suppressing battery swelling.

Examples of the additive may be at least one selected from the group consisting of a fluorine-unsubstituted cyclic carbonate-based compound, a sultone-based compound, a sulfate-based compound, a benzene-based compound, an amine-based compound, and a silane-based compound.

The fluorine-unsubstituted cyclic carbonate-based compound may include vinylene carbonate (VC) or vinyl ethylene carbonate (VEC).

Specific examples of the sultone-based compound may be at least one selected from the group consisting of 1,3-propane sultone (PS), 1,4-butane sultone, ethane sultone, 1,3-propene sultone (PRS), 1,4-butene sultone, and 1-methyl-1,3-propene sultone.

Specific examples of the sulfate-based compound may be ethylene sulfate (Esa), trimethylene sulfate (TMS), or methyl trimethylene sulfate (MTMS).

The benzene-based compound may be fluorobenzene, and the amine-based compound may be triethanolamine or ethylenediamine.

The silane-based compound may be tetravinylsilane.

Two or more compounds may be mixed and used as the additive, and the additive may be present in an amount of 0.01 wt% to 20 wt%, specifically, 0.05 wt% to 5 wt% based on a total weight of the liquid electrolyte. In a case in which the amount of the additive is greater than 20 wt%, there is a possibility that a side reaction excessively occurs during charge and discharge of the battery due to the excessive amount of the additive.

The viscosity of the liquid electrolyte 160 may be in a range of 2 cP to 20 cP, and, in a case in which the viscosity satisfies the above range, since it is possible to secure appropriate viscosity at which the electrolyte 160 may permeate the electrode 122 evenly, initial charge and discharge efficiency of the battery cell 100 may also be improved, manufacturing time of the battery cell 100 may be shortened, and the manufacturing costs may be effectively reduced.

In contrast, in a case in which the viscosity of the liquid electrolyte 160 is less than 2 cP, a decrease in capacity and lifetime of the battery cell 100 may occur, and, in contrast, in a case in which the viscosity of the liquid electrolyte 160 is greater than 20 cP, since the wettability of the liquid electrolyte 160 is reduced to increase the manufacturing time, the manufacturing costs of the battery cell 100 may be increased.

In the battery cell 100 of the present disclosure, the effective lithium salt participating in charge and discharge of the liquid electrolyte 160 is gradually reduced due to lithium precipitation as the charge and discharge of the battery cell 100 is repeated, but the first lithium salt of the gel electrolyte 150, which is a solute, moves into the liquid electrolyte 160 due to the concentration gradient of the lithium salts of the gel electrolyte 150 and the liquid electrolyte 160 such that the insufficient lithium salt may be replenished in the liquid electrolyte 160. Therefore, the battery cell 100 of the present disclosure is prepared from a relatively low concentration of the liquid electrolyte 160, but depletion of the effective lithium salt participating in the charge and discharge of the liquid electrolyte 160 may be prevented even if the battery cell 100 is charged and discharged many times, and thus, the lifetime of the battery cell 100 may be effectively increased. In this regard, the present application demonstrates its effect through experimental examples to be described later.

Hereinafter, a method of preparing the battery cell of the present disclosure will be described in more detail.

## Method of Preparing the Battery Cell

According to an embodiment of the present disclosure, the method of preparing the battery cell of the present disclosure may include the steps of:

preparing an electrode assembly which includes a plurality of electrodes, an electrode tab formed on at least one side of each of the plurality of electrodes, and a separator disposed between the plurality of electrodes;
disposing the electrode assembly in an accommodation space of a cell case;

injecting a gel electrolyte composition containing a first molarity of a first lithium salt and a curable compound into the accommodation space and disposing the gel electrolyte composition around the electrode tab;

curing the gel electrolyte composition to form a gel electrolyte surrounding the electrode tab; and

injecting a liquid electrolyte containing a second molarity of a second lithium salt to be accommodated between the plurality of electrodes.

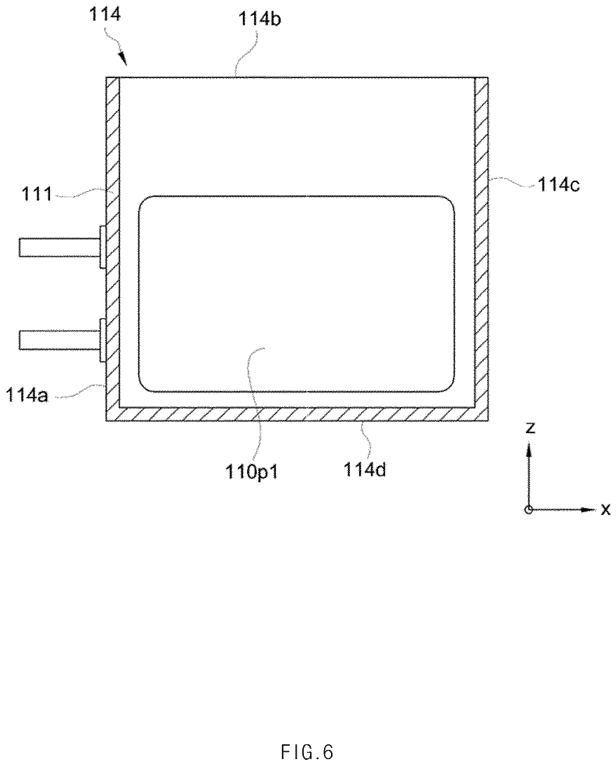

First, based on FIGS. 1, 4, and 5, a method of preparing the battery cell 100 of the present disclosure is illustrated in FIGS. 6 to 11.

First, the method of preparing the battery cell 100 according to the embodiment of the present disclosure may include the steps of preparing an electrode assembly which includes a plurality of electrodes 122p and 122n, an electrode tab 121 formed on at least one side of each of the plurality of electrodes 122p and 122n, and a separator disposed between the plurality of electrodes 122p and 122n, disposing the electrode assembly 120 in an accommodation space 110p1 of a cell case 110, injecting a gel electrolyte composition containing a first molarity of a first lithium salt and a curable compound into the accommodation space 110p1 to surround the electrode tab, curing the gel electrolyte composition so as to prevent movement of the electrode tab 121 to dispose a gel electrolyte around the electrode tab; and injecting a liquid electrolyte 160 containing a second molarity of a second lithium salt to be accommodated between the plurality of electrodes 122p and 122n.

In this case, the preparing of the electrode assembly 120 may include a step of forming the electrode assembly 120 by sequentially stacking the positive electrode 122p having the positive electrode tab 121a formed on one side thereof, the separator 170, and the negative electrode 122n having the negative electrode tab 121b formed on one side thereof. In this case, the electrode tab 121 may be formed on at least one side of each of the electrodes 122p and 122n.

In an embodiment, the disposing of the electrode assembly 120 in the accommodation space 110p1 of a pouch 114 includes a step of disposing the electrode assembly 120, which includes the electrodes 122 having the electrode tab 121 formed on at least one side thereof and the separator 170 disposed between the electrodes 122, in the accommodation space 110p1 of the pouch 114. Herein, the pouch 114 may be referred to as a configuration in a step before preparing the cell case 110 in which the accommodation space 110p1 is completely sealed. The pouch 114 may be formed by bonding the outer circumferential portions of each of the first cell sheet 114T and the second cell sheet 114P to each other. The accommodation space 110p1, in which the electrode tab 121, the electrode assembly 120, the gel electrolyte composition 155, and the liquid electrolyte 160 may be accommodated, may be formed in the pouch 114.

For example, the electrode tab 121 may be disposed on the first side 120a of the electrode assembly 120. However, the present disclosure is not necessarily limited thereto, and, in a battery cell (not shown) prepared by a preparation method according to another embodiment, the electrode tab 121 may be disposed on each of the first side 120a and the third side 120c of the electrode assembly 120. In this case, the gel electrolyte 150 may be disposed on each of the first side 120a and the third side 120c of the electrode assembly 120 in the accommodation space 110p1 of the pouch 114. In this case, the liquid electrolyte 160 may be disposed between the electrode 122 and the separator 170, between the electrodes 122, and on the second side 120b and the fourth side 120d of the electrode assembly 120 in the accommodation space 110p1.

Thus, according to the configuration of the present disclosure, when compared to the case where the liquid electrolyte 160 of the conventional battery cell 100 surrounds the electrode tab 121, the preparation method of the present disclosure may prepare the battery cell 100 capable of effectively preventing disconnection at a connection portion between the electrode tab 121 and the electrode 122 or at a bent portion of the electrode tab 121 by preventing the movement of the electrode tab 121 by the gel electrolyte 150 surrounding the electrode tab 121.

Also, since the preparation method of the present disclosure may prevent the disconnection of the electrode tab 121 due to the corrosion of the electrode tab 121, which is caused by the lithium salt contained in the electrolyte of the conventional battery cell, by forming the passivation layer 123 on the surface of the electrode tab 121 in the prepared battery cell 100, durability of the battery cell 100 may be effectively increased.

Specifically, a front view illustrating a state in which the plurality of electrodes 122p and 122n are inserted into the accommodation space 110p1 of the pouch 114 in the method of preparing the battery cell 100 according to another embodiment of the present disclosure is illustrated in FIG. 6.

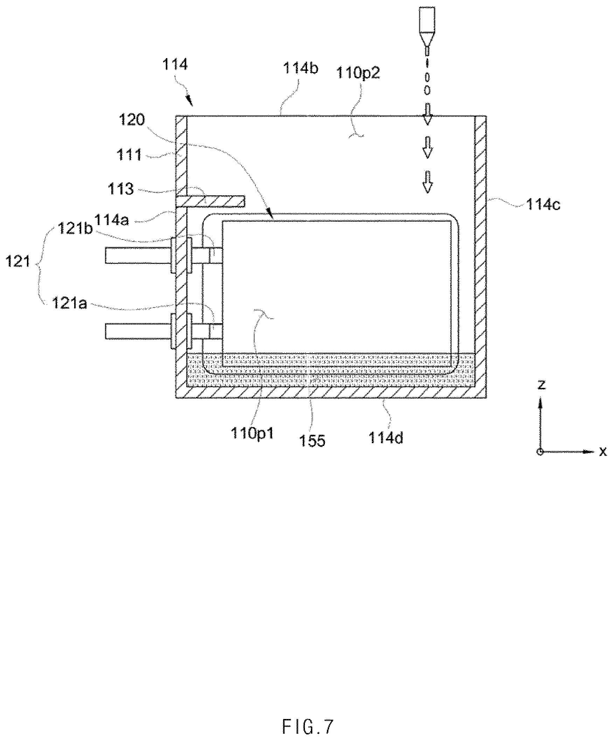

Also, a front view illustrating the inside of the pouch in which the above-described gel electrolyte composition 155 is injected into the accommodation space 110p1 in the method of preparing the battery cell 100 according to an embodiment of the present disclosure is illustrated in FIG. 7. For reference, in FIG. 7, the pouch 114 is shown transparently so that the inside of the pouch 114 may be seen from the outside for drawing description.

First, referring to FIG. 6, after the disposing of the electrode assembly (not shown) in the accommodation space 110p1 of the cell sheet, in order to form the pouch 114, a sealing portion 111 was formed by heat-fusing some outer circumferential portions, for example, the first outer circumferential portion 114a, the third outer circumferential portion 114c, and the fourth outer circumferential portion 114d except for the second outer circumferential portion 114b, of each of the first cell sheet 114T and the second cell sheet 114P in a state in which the first cell sheet 114T and the second cell sheet 114P are stacked, to each other. Also, it was configured such that the gel electrolyte composition 155 or the liquid electrolyte 160 may be introduced into the accommodation space 110p1 through a gap between the second outer circumferential portions 114b in which the gap was opened because the first cell sheet 114T and second cell sheet 114P were not heat-fused.

Referring to FIGS. 2, 5, and 7, an injection space 110p2 may be formed in the second outer circumferential portion 114b by the heat-fusion process of the outer circumferential portions. The injection space 110p2 may be a space located on one side (upper side) of the accommodation space 110p1, in which the electrodes 122 are accommodated, in an internal space formed between the first cell sheet 114T and the second cell sheet 114P. For example, a region from the open second outer circumferential portion 114b of the pouch 114 before the accommodation space 110p1 may be set as the injection space 110p2. The injection space 110p2 may communicate with the accommodation space 110p1. The injection space 110p2 may act as a passage through which the gel electrolyte composition 155 or the liquid electrolyte 160 may move into the accommodation space 110p1.

Referring to FIG. 7, the method of preparing the battery cell 100 of the present disclosure may further include a step of forming a blocking portion 113 by heat-fusing a portion between the injection space 110p2 and the accommodation space 110p1 of the pouch 114, before the injecting of the gel electrolyte composition.

The blocking portion 113 may also be formed by heat-fusion from the first outer circumferential portion 114a to the third outer circumferential portion 114c of the pouch 114.

Movement of the gel electrolyte composition injected into the accommodation space again from the accommodation space to the injection space before the curing may be prevented by the blocking portion, and, since it is easy to maintain a state in which the gel electrolyte composition is disposed to surround the electrode tab before the curing of the gel electrolyte composition, processability may be significantly increased.

Referring to FIG. 7 together with FIG. 3, the above-described gel electrolyte composition 155 containing the first molarity of the first lithium salt and the curable compound is injected into the accommodation space 110p1 through the injection space 110p2 so as to surround the electrode tab 121.

The gel electrolyte composition 155 may be configured such that it is a liquid-phase electrolyte before curing and the liquid-phase electrolyte is changed into a gel-phase electrolyte by curing the curable compound in the subsequent step. Also, after the injection, the gel electrolyte composition 155 may be disposed in the accommodation space 110p1 to surround the outer surface of the electrode tab 121 or to fill a gap between the electrode tabs 121.

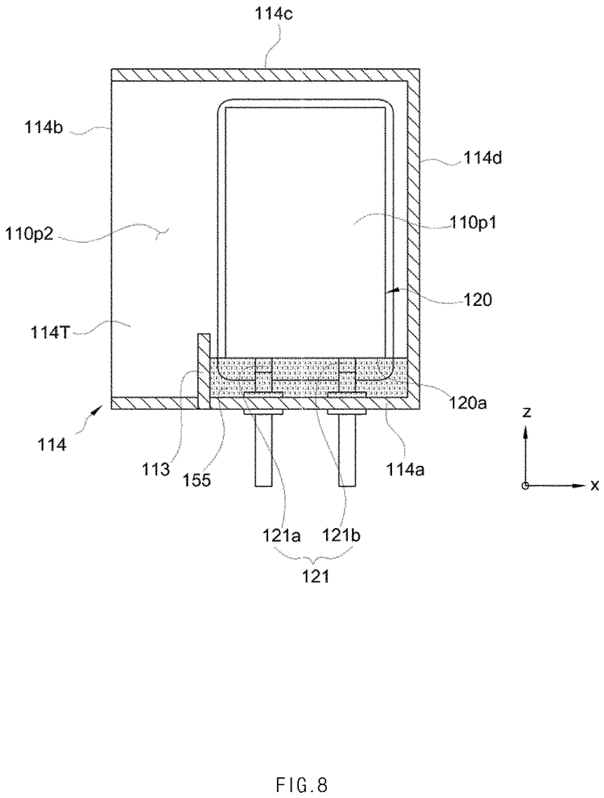

A front view illustrating the inside of the pouch in which the gel electrolyte composition 155 is thermally cured in the accommodation space 110p1 in the method of preparing the battery cell 100 of the present disclosure is illustrated in FIG. 8. For reference, in FIG. 8, the pouch is shown transparently so that the inside of the pouch 114 may be seen from the outside for drawing description.

Referring to FIG. 8, the step of changing the gel electrolyte composition 155 into the gel-phase gel electrolyte 150 to prevent the movement of the electrode tab 121 includes a step of rotating the pouch 114 such that the electrode tab 121 faces downward, after the gel electrolyte composition 155 is injected into the accommodation space 110p1 to surround the electrode tab 121. That is, the gel electrolyte composition 155 may be moved by gravity such that the gel electrolyte composition 155 surrounds the electrode tab 121.

In an embodiment, the curing may include a step of curing the gel electrolyte composition 155, which has been disposed in the accommodation space 110p1 to surround the electrode tab 121, into a gel phase. For example, in a case in which a thermosetting compound is included in the gel electrolyte composition 155, the gel electrolyte composition 155 may be thermally cured by storing the gel electrolyte composition in a thermostat that is set at a predetermined temperature for a predetermined period of time or longer. The thermosetting compound is heated to form cross-links by a thermal polymerization reaction such that the gel electrolyte composition 155 in a liquid state may be converted into a gel state. For example, in a case in which the pouch 114 is stored in the thermostat, the pouch 114 may be stored in the thermostat at 60°C for 5 hours to 24 hours in order to convert the gel electrolyte composition 155 into a gel state.

Thus, according to the configuration of the present disclosure, when compared to the case where the liquid electrolyte 160 of the battery cell 100 of the related art surrounds the electrode tab 121, the method of preparing the battery cell 100 may prepare the battery cell 100 in which the gel electrolyte 150 may reduce deformation by preventing the movement of the electrode tab 121 when an external impact is applied to the battery cell 100. Accordingly, the method of preparing the battery cell 100 of the present disclosure may effectively increase the durability of the battery cell 100.

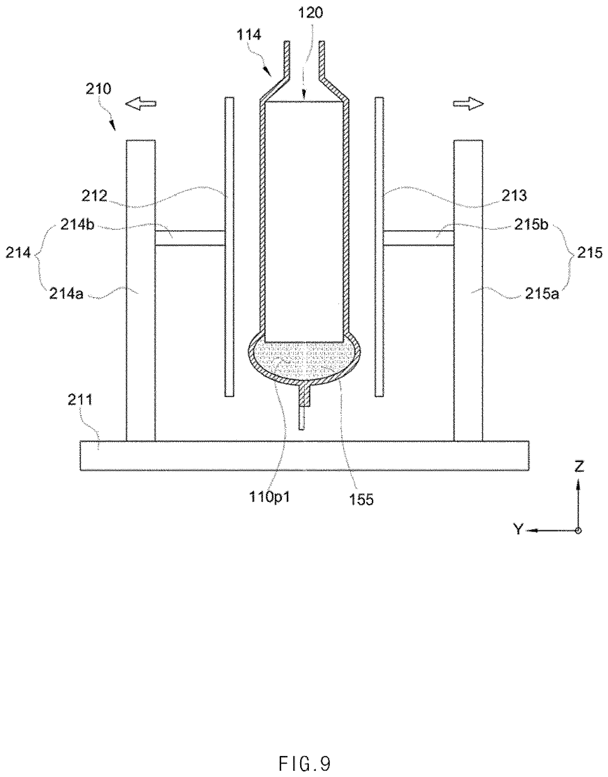

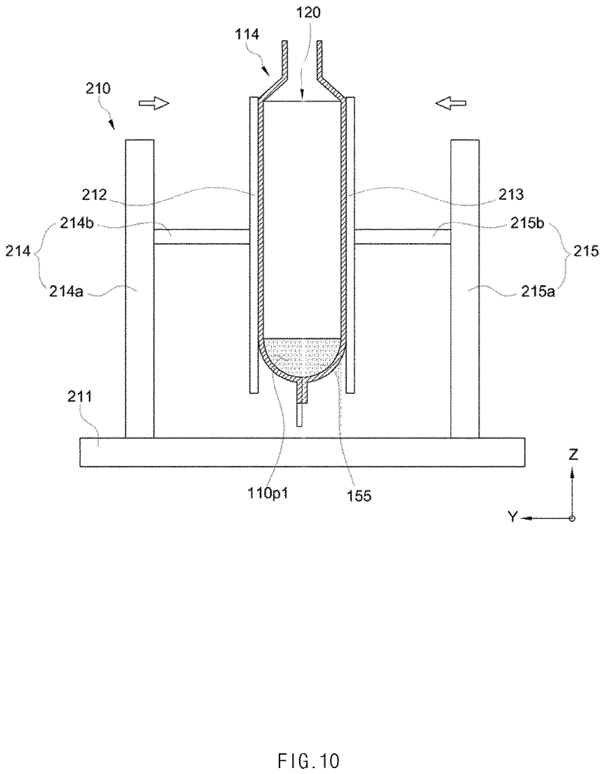

A side view illustrating a state before fixing the battery cell 100 using a fixing jig 210 during the curing of the gel electrolyte composition 155 in the method of preparing the battery cell according to the present disclosure is illustrated in FIG. 9. A side view illustrating a state in which the battery cell 100 is fixed using the fixing jig 210 during the curing of the gel electrolyte composition 155 in the method of preparing the battery cell according to the present disclosure is illustrated in FIG. 10. For convenience of explanation, the electrode tab 121 and the like are not shown in FIGS. 9 and 10.

Referring to FIGS. 9 and 10, in the injecting of the gel electrolyte composition 155 containing the curable compound into the accommodation space 110p1 so as to surround the electrode tab 121, in a case in which the gel electrolyte composition 155 is injected into the pouch 114, a portion of the accommodation space 110p1 of the pouch 114 accommodating the gel electrolyte composition 155 may be convexly deformed in an outward direction due to the fluidity of the gel electrolyte composition 155. In a case in which the gel electrolyte composition 155 is cured in a shape in which the portion of the accommodation space 110p1 of the pouch 114 is convexly deformed, since the deformed shape may vary from product to product, it may be difficult to secure consistent quality of the product and defects may occur because an appearance of the pouch 114 is not smooth.

Accordingly, the step of changing the gel electrolyte composition 155 into the gel-phase gel electrolyte 150 to prevent the movement of the electrode tab 121 of the preparation method of the present disclosure may include a step of pressurizing and fixing the pouch 114 while the gel electrolyte composition 155 is cured. In this case, the pouch 114 may be fixed by pressurizing both outer sides of the pouch 114 using the fixing jig 210. Specifically, the fixing jig 210 may include a first jig plate 212 and a second jig plate 213. Each of the first jig plate 212 and the second jig plate 213 may have a size corresponding to or larger than one side of the pouch 114. That is, each of the first jig plate 212 and the second jig plate 213 may have a size capable of covering the pouch 114. The pouch 114 and the electrode assembly 120 accommodated in the pouch 114 may be disposed between the first jig plate 212 and the second jig plate 213. In addition, a portion of the convexly deformed accommodation space 110p1 of the pouch 114 may be pressurized by the first jig plate 212 and the second jig plate 213.

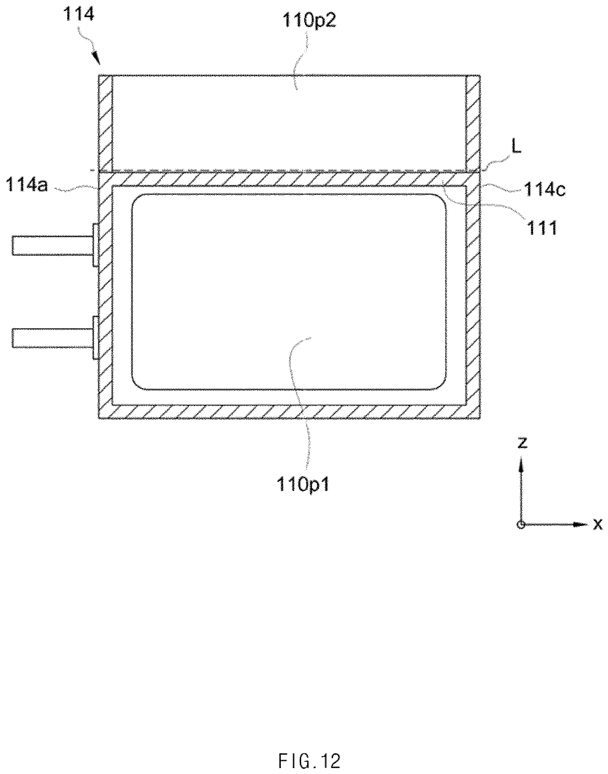

Also, the fixing jig 210 may further include a pedestal 211, a first support 214, and a second support 215. The first support 214 and the second support 215 may be disposed on both sides (Y-axis direction) of the pouch 114. The pedestal 211 may be configured to be mounted on the ground such that the fixing jig 210 may be stably positioned on the ground. The pedestal 211 may have a plate shape extending parallel to the ground. For example, as shown in FIG. 12, the first support 214 may include a pillar portion 214a extending from an upper surface of the pedestal 211 in an upward direction (Z-axis direction) and a connection portion 214b that extends in a horizontal direction from the pillar portion 214a and is connected to a side portion of the first jig plate 212 in a positive direction of the Y-axis. Also, the second support 215 may include a pillar portion 215a extending from the upper surface of the pedestal 211 in the upward direction and a connection portion 215b that extends in a horizontal direction from the pillar portion 215a and is connected to a side portion of the second jig plate 213 in a negative direction of the Y-axis.

Furthermore, the first support 214 and the second support 215 may be configured such that they may move on the pedestal 211 in directions towards each other, or may move on the pedestal 211 in directions away from each other. For example, in a case in which the first support 214 and the second support 215 move in the directions towards each other, the first jig plate 212 and the second jig plate 213, which are connected to the first support 214 and the second support 215, respectively, may move closer to each other. In this case, the pouch 114 and the electrode assembly 120 accommodated in the pouch 114 may be fixed by pressurizing both outer sides of the pouch 114 disposed between the first jig plate 212 and the second jig plate 213. For example, in a case in which the curing of the gel electrolyte composition 155 is finished, a fixed state of the pouch 114 may be released by moving the first support 214 and the second support 215 in the directions away from each other. For example, as shown in FIG. 9, the pouch 114 may have a shape in which the portion of the accommodation space 110p1 of the pouch 114 protrudes convexly due to the gel electrolyte composition 155. However, as shown in FIG. 10, in a case in which the first support 214 and the second support 215 are moved toward the pouch 114, the pouch 114 is pressurized by the first jig plate 212 and the second jig plate 213, and the accommodation space 110p1 protruding convexly by the gel electrolyte composition 155 may be guided to be deformed into a recessed shape by this pressurization.

Thus, according to the configuration of the present disclosure, since the preparation method of the present disclosure includes the step of pressurizing and fixing the pouch 114 while the gel electrolyte composition 155 is cured so as to prevent the movement of the electrode tab 121, the preparation method of the present disclosure may stably fix the electrode assembly 120 accommodated in the pouch 114 and may prevent solidification of the gel electrolyte composition 155 in a state in which the portion of the accommodation space 110p1 of the pouch 114 is convexly deformed outward due to the gel electrolyte composition 155. Accordingly, the preparation method of the present disclosure may effectively reduce failure rate of the prepared battery cell 100.

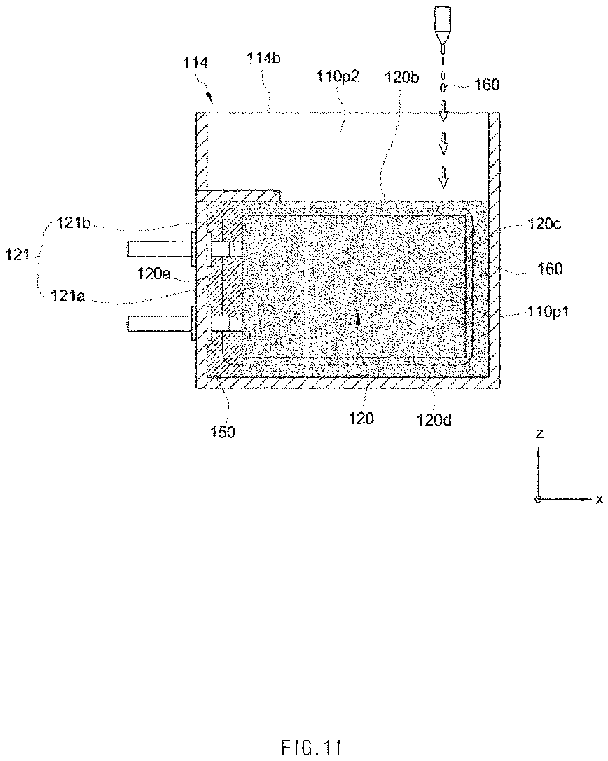

A perspective view illustrating the inside of the pouch 114 in which the liquid electrolyte 160 is injected into the accommodation space 110p1 in the method of preparing the battery cell according to the present disclosure is illustrated in FIG. 11. For reference, in FIG. 11, for convenience of explanation of the drawing, the inside of the pouch 114 is shown transparently so as to be seen from the outside.

Referring again to FIGS. 2, 4, 8, and 11, the method of preparing the battery cell according to the present disclosure may further include a step of rotating such that the electrode tab 121 is disposed in an X-axis direction of the electrode assembly 120 before the injecting of the liquid electrolyte 160. In this case, the pouch 114 may be erected in a vertical direction (Z-axis direction) with respect to the ground such that the accommodation space 110p1 is seen from the front with respect to the ground in FIG. 11. In this case, since the gel electrolyte composition 155 is already phase-changed into a gel phase to form the gel electrolyte 150, the gel electrolyte 150 may not move to another location in the accommodation space 110p1 even in a case in which the pouch 114 is rotated such that the electrode tab 121 is disposed on a side (in the X-axis direction) of the electrode assembly 120. In addition, the liquid electrolyte 160 may fill a remaining space of the accommodation space 110p1 in which the gel electrolyte 150 is not disposed.

Specifically, the injecting of the liquid electrolyte 160 may include a step of injecting the liquid electrolyte 160 into the accommodation space 110p1 through the injection space 110p2 through the open second outer circumferential portion 114b of the first cell sheet 114T and the second cell sheets 114P. In this case, the liquid electrolyte 160 may be disposed between the electrodes 122 and to surround another side of the electrodes 122 on which the electrode tabs 121 are not disposed. For example, the liquid electrolyte 160 may be disposed between the electrodes 122 and on an outermost side of the electrodes 122. Also, as shown in FIG. 11, the liquid electrolyte 160 may be disposed to surround the second side 120b, the third side 120c, and the fourth side 120d of the electrode assembly 120.

Also, in the method of preparing the battery cell of the present disclosure, since electrode wettability is improved due to a short absorption time for the electrode of the electrode assembly 120 by injecting the liquid electrolyte 160 that has high fluidity by including the second molarity, which is lower than the first molarity of the gel electrolyte 150, of the second lithium salt, the method of preparing the battery cell of the present disclosure may improve the initial charge and discharge efficiency and may effectively reduce the manufacturing costs by shortening the manufacturing time of the battery cell 100.

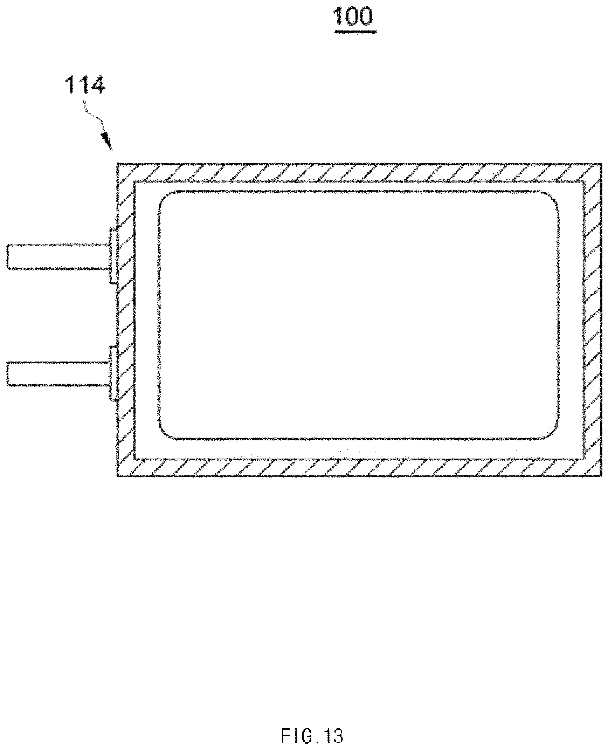

A front view illustrating a state in which one side of the accommodation space 110p1 of the pouch 114 is additionally sealed in the method of preparing the battery cell according to the present disclosure is illustrated in FIG. 12. A front view illustrating a state in which the injection space 110p2 of the pouch 114 is removed in the method of preparing the battery cell according to the present disclosure is illustrated in FIG. 13.

Referring again to FIGS. 12 and 13 together with FIG. 4, the method of preparing the battery cell 100 according to the present disclosure may further include steps of sealing the accommodation space 110p1 of the pouch 114, and cutting a region of the injection space 110p2. Specifically, in the sealing of the accommodation space 110p1 of the pouch 114, a boundary portion between the accommodation space 110p1 and the injection space 110p2 of the pouch 114 may be heat-fused. For example, as shown in FIG. 12, the sealing portion 111 may be formed by heat-fusion from the first outer circumferential portion 114a of the pouch 114 to the third outer circumferential portion 114c along a boundary between the accommodation space 110p1 and the injection space 110p2 of the pouch 114. For example, as in the method of preparing the battery cell 100 of FIG. 7 described above, in a case in which the blocking portion 113 is formed by heat-fusing the portion between the injection space 110p2 and the accommodation space 110p1 of the pouch 114, in order to additionally form the sealing portion 111, heat-fusion may be performed from the blocking portion 113 to the third outer circumferential portion 114c of the pouch 114.

Also, a cutting line L may be set on an outside of the sealing portion 111. Thereafter, as shown in FIG. 13, the region of the injection space 110p2 of the pouch 114 may be removed by cutting along the cutting line L.

Furthermore, in the preparation method according to an embodiment of the present disclosure, a battery activation process may be performed before the step of sealing the accommodating space 110p1 of the pouch 114 which is performed in FIG. 12. Herein, the battery activation process is a process of first performing a charge/discharge operation in the battery cell 100. A large amount of gas is generated during the charge/discharge operation of the battery cell 100. The gas thus generated may move from the accommodation space 110p1 to the injection space 110p2 and may be discharged to the outside through the open second outer circumferential portion 114b of the pouch 114. In this battery activation process, a magnitude of charging current and charge/discharge time may vary depending on materials of the positive electrode 122p and the negative electrode 122n.

Also, the preparation method according to the present disclosure may perform a battery aging process after the sealing of the accommodation space 110p1 of the pouch 114. In this case, a temperature, for example, may be in a range of 45°C to 70°C and aging time may be in a range of 1 day to 3 days.

In comparison to the conventional battery cell 100 in which the liquid electrolyte 160 surrounds the electrode tab 121, the battery cell 100 prepared by the preparation method of the present disclosure as described above may prevent the movement and deformation of the electrode tab 121 due to the external impact by disposing the gel electrolyte 150 with low fluidity in a form surrounding the electrode tab 121. Thus, in a case in which the battery cell 100 of the present disclosure is used in a vehicle or the like, since the disconnection may be prevented by minimizing the movement of the electrode tab 121 by the gel electrolyte 150 even if the frequent impact and vibration generated during movement are transmitted to the battery cell 100, and, accordingly, the lifetime may be increased and a decrease in capacity of the battery may be improved by preventing deactivation of the electrode 122.

With respect to the battery cell 100 prepared by the preparation method of the present disclosure as described above, since the insufficient lithium salt is replenished in the liquid electrolyte 160, while the first lithium salt moves from the gel electrolyte 150, which is a solute, to the liquid electrolyte 160 by the concentration gradient of the lithium salt with respect to the gel electrolyte 150, even if the second lithium salt of the liquid electrolyte 160 is reduced due to repeated charge and discharge, by securing the liquid electrolyte 160 with fluidity in a space between the accommodation space 110p1 and the electrode assembly 120 as much as possible and simultaneously including the gel electrolyte 150 containing the first molarity, which is higher than the second molarity of the second lithium salt of the liquid electrolyte 160, of the first lithium salt, the depletion of the lithium salt of the liquid electrolyte 160 may be prevented, and thus, the lifetime of the battery cell 100 may be effectively increased.

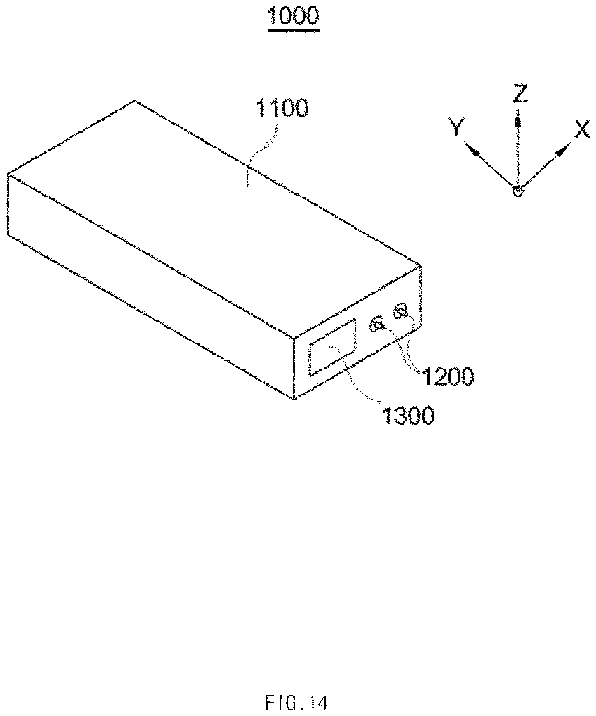

FIG. 14 is a perspective view schematically illustrating a battery module 1000 according to an embodiment of the present disclosure.

Referring to FIG. 14 together with FIG. 1, the present disclosure may provide the battery module 1000 including at least one battery cell 100. The battery module 1000 may include a module housing 1100 accommodating at least one battery cell 100 therein, external output terminals 1200 provided on a front end of the module housing 1100, and a control unit 1300 for controlling charge and discharge of the battery cell 100. Also, in a case in which two or more battery cells 100 are included, the battery module 1000 may further include a bus bar (not shown) electrically connecting the two or more battery cells 100. The bus bar may be electrically connected to the electrode lead 130 of each of the battery cells 100. In the battery module 1000 of the present disclosure, since well-known components may be used as essential components other than the battery cell 100, descriptions of these components will be omitted.

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

## Examples

### Example 1

(Preparation of Liquid Electrolyte)

After $LiPF_6$ was dissolved in a non-aqueous organic solvent, in which ethylene carbonate (EC):ethyl methyl carbonate (EMC) were mixed in a volume ratio of 30:70, at a concentration of 0.75 M, a liquid electrolyte was prepared by adding 1 wt% of vinylene carbonate (VC) as an additive. In this case, viscosity of the liquid electrolyte was 2.5 cP.

(Preparation of Gel Electrolyte Composition)

After $LiPF_6$ was dissolved in a non-aqueous organic solvent, in which ethylene carbonate (EC):ethyl methyl carbonate (DMC) were mixed in a volume ratio of 30:70, such that a molarity of the $LiPF_6$ was 2.0 M, a gel electrolyte composition was prepared by adding 5 wt% of trimethylolpropane triacrylate as a curable polymer, 1 wt% of 2,2'-azobis(isobutyronitrile) (AIBN) as a polymerization initiator, and 1 wt% of vinylene carbonate (VC). In this case, viscosity of the gel electrolyte composition was 8.0 cP.

(Electrode Assembly Preparation)

A positive electrode active material ($Li(Ni_{0.8}Co_{0.1}Mn_{0.1})O_2$), a conductive agent (carbon black), and a binder (polyvinylidene fluoride: PVDF) were added in a weight ratio of 94:3:3 to N-methyl-2-pyrrolidone (NMP), as a solvent, to prepare a positive electrode active material slurry (solid content 48 wt%). A 15 $\mu$m thick positive electrode collector (aluminum (Al) thin film) was coated with the positive electrode active material slurry, dried, and then roll-pressed to prepare a positive electrode. A negative electrode active material (carbon powder), a binder (styrene-butadiene rubber, SBR), sodium carboxymethyl cellulose (CMC), and a conductive agent (carbon black) were added to water, as a solvent, in a weight ratio of 96:2:1:1 to prepare a negative electrode active material slurry (solid content: 70 wt%). A 10 $\mu$m thick negative electrode collector (copper (Cu) thin film) was coated with the negative electrode active material slurry, dried, and then roll-pressed to prepare a negative electrode. An electrode assembly was prepared by stacking the positive electrode, a separator formed of three layers of polypropylene/polyethylene/polypropylene (PP/PE/PP), and the negative electrode.

(Battery Cell Preparation)

After preparing the electrode assembly prepared by the above-described method, it was accommodated in a pouch, and the gel electrolyte composition prepared above was injected into an accommodation space so as to surround an electrode tab and then stored at a high temperature of 60°C for 5 hours in a thermostat to thermally cure the gel electrolyte composition into a gel electrolyte. Then, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

### Example 2

(Preparation of Liquid Electrolyte)

LiPF$_6$ and LiN(SO$_2$F)$_2$ (LiFSI) were dissolved in a non-aqueous organic solvent, in which ethylene carbonate (EC):ethyl methyl carbonate (EMC) were mixed in a volume ratio of 30:70, such that concentrations of the LiPF$_6$ and the LiN(SO$_2$F)$_2$ (LiFSI) were 0.3 M and 0.7 M, respectively. Thereafter, a liquid electrolyte was prepared by adding 1 wt% of vinylene carbonate (VC) as an additive. In this case, viscosity of the liquid electrolyte was 3.4 cP.

(Preparation of Gel Electrolyte Composition)

LiPF$_6$ was dissolved in a non-aqueous organic solvent, in which ethylene carbonate (EC):ethyl methyl carbonate (DMC) were mixed in a volume ratio of 30:70, such that a molarity of the LiPF$_6$ was 2.0 M. Thereafter, a gel electrolyte composition was prepared by adding 5 wt% of trimethylolpropane triacrylate as a curable polymer, 1 wt% of 2,2'-azobis(iso-butyronitrile) (AIBN) as a polymerization initiator, and 1 wt% of vinylene carbonate (VC). In this case, viscosity of the gel electrolyte composition was 8.0 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.
Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

## Example 3

(Preparation of Liquid Electrolyte)

LiPF$_6$ and LiN(SO$_2$F)$_2$ (LiFSI) were dissolved in a non-aqueous organic solvent, in which ethylene carbonate (EC):ethyl methyl carbonate (EMC) were mixed in a volume ratio of 30:70, such that concentrations of the LiPF$_6$ and the LiN(SO$_2$F)$_2$ (LiFSI) were 0.7 M and 0.7 M, respectively. Thereafter, a liquid electrolyte was prepared by adding 1 wt% of vinylene carbonate (VC) as an additive. In this case, viscosity of the liquid electrolyte was 3.4 cP.

(Battery Cell Preparation)

A battery cell was prepared in the same manner as in Example 2 except that the above-prepared liquid electrolyte was injected into an accommodation space of a pouch. In this case, a volume ratio of the liquid electrolyte to the gel electrolyte composition, which were injected into the pouch, was about 100:25.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.
Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

## Example 4

(Preparation of Liquid Electrolyte)

LiPF$_6$ and LiN(SO$_2$F)$_2$ (LiFSI) were dissolved in a non-aqueous organic solvent, in which ethylene carbonate (EC):ethyl methyl carbonate (EMC) were mixed in a volume ratio of 30:70, such that concentrations of the LiPF$_6$ and the

LiN(SO$_2$F)$_2$ (LiFSI) were 0.3 M and 0.7 M, respectively. Thereafter, a liquid electrolyte was prepared by adding 1 wt% of vinylene carbonate (VC) as an additive. In this case, viscosity of the liquid electrolyte was 3.4 cP.

(Preparation of Gel Electrolyte Composition)

LiPF$_6$ was dissolved in a non-aqueous organic solvent, in which ethylene carbonate (EC):ethyl methyl carbonate (DMC) were mixed in a volume ratio of 30:70, such that a molarity of the LiPF$_6$ was 5.0 M. Thereafter, a gel electrolyte composition was prepared by adding 5 wt% of trimethylolpropane triacrylate as a curable polymer, 1 wt% of 2,2'-azobis(iso-butyronitrile) (AIBN) as a polymerization initiator, and 1 wt% of vinylene carbonate (VC). In this case, viscosity of the gel electrolyte composition was 34.0 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.
Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

**Example 5**

(Preparation of Liquid Electrolyte)

LiPF$_6$ and LiN(SO$_2$F)$_2$ (LiFSI) were dissolved in a non-aqueous organic solvent, in which ethylene carbonate (EC):ethyl methyl carbonate (EMC) were mixed in a volume ratio of 30:70, such that concentrations of the LiPF$_6$ and the LiN(SO$_2$F)$_2$ (LiFSI) were 0.3 M and 0.7 M, respectively. Thereafter, a liquid electrolyte was prepared by adding 1 wt% of vinylene carbonate (VC) as an additive. In this case, viscosity of the liquid electrolyte was 3.4 cP.

(Preparation of Gel Electrolyte Composition)

LiPF$_6$ was dissolved in a non-aqueous organic solvent, in which ethylene carbonate (EC):ethyl methyl carbonate (DMC) were mixed in a volume ratio of 30:70, such that a molarity of the LiPF$_6$ was 6.0 M. Thereafter, a gel electrolyte composition was prepared by adding 5 wt% of trimethylolpropane triacrylate as a curable polymer, 1 wt% of 2,2'-azobis(iso-butyronitrile) (AIBN) as a polymerization initiator, and 1 wt% of vinylene carbonate (VC). In this case, viscosity of the gel electrolyte composition was 62.0 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.
Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

**Comparative Example 1**

(Preparation of Liquid Electrolyte)

After LiPF$_6$ was dissolved in a non-aqueous organic solvent, in which ethylene carbonate (EC):ethyl methyl carbonate (EMC) were mixed in a volume ratio of 30:70, at a concentration of 1.0 M, a liquid electrolyte was prepared by adding 1 wt% of vinylene carbonate (VC) as an additive. In this case, viscosity of the liquid electrolyte was 3.3 cP.

(Preparation of Gel Electrolyte Composition)

After LiPF$_6$ was dissolved in a non-aqueous organic solvent, in which ethylene carbonate (EC):ethyl methyl carbonate (DMC) were mixed in a volume ratio of 30:70, such that a molarity of the LiPF$_6$ was 1.0 M, a gel electrolyte composition was prepared by adding 5 wt% of trimethylolpropane triacrylate as a curable polymer, 1 wt% of 2,2'-azobis(isobutyronitrile) (AIBN) as a polymerization initiator, and 1 wt% of vinylene carbonate (VC). In this case, viscosity of the gel electrolyte composition was 4.7 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.

Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

**Comparative Example 2**

(Preparation of Liquid Electrolyte)

After LiPF$_6$ was dissolved in a non-aqueous organic solvent, in which ethylene carbonate (EC):ethyl methyl carbonate (EMC) were mixed in a volume ratio of 30:70, at a concentration of 0.5 M, a liquid electrolyte was prepared by adding 1 wt% of vinylene carbonate (VC) as an additive. In this case, viscosity of the liquid electrolyte was 1.7 cP.

(Preparation of Gel Electrolyte Composition)

After LiPF$_6$ was dissolved in a non-aqueous organic solvent, in which ethylene carbonate (EC):ethyl methyl carbonate (DMC) were mixed in a volume ratio of 30:70, such that a molarity of the LiPF$_6$ was 0.5 M, a gel electrolyte composition was prepared by adding 5 wt% of trimethylolpropane triacrylate as a curable polymer, 1 wt% of 2,2'-azobis(isobutyronitrile) (AIBN) as a polymerization initiator, and 1 wt% of vinylene carbonate (VC). In this case, viscosity of the gel electrolyte composition was 2.0 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.

Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

**Comparative Example 3**

(Preparation of Liquid Electrolyte)

After LiPF$_6$ was dissolved in a non-aqueous organic solvent, in which ethylene carbonate (EC):ethyl methyl carbonate (EMC) were mixed in a volume ratio of 30:70, at a concentration of 2.0 M, a liquid electrolyte was prepared by adding 1 wt% of vinylene carbonate (VC) as an additive. In this case, viscosity of the liquid electrolyte was 6.7 cP.

(Preparation of Gel Electrolyte Composition)

After LiPF$_6$ was dissolved in a non-aqueous organic solvent, in which ethylene carbonate (EC):ethyl methyl carbonate (DMC) were mixed in a volume ratio of 30:70, such that a molarity of the LiPF$_6$ was 2.0 M, a gel electrolyte composition was prepared by adding 5 wt% of trimethylolpropane triacrylate as a curable polymer, 1 wt% of 2,2'-azobis(isobutyronitrile) (AIBN) as a polymerization initiator, and 1 wt% of vinylene carbonate (VC). In this case, viscosity of the gel electrolyte composition was 8.0 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.

Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

**Comparative Example 4**

(Preparation of Liquid Electrolyte)

After $LiN(SO_2F)_2$ was dissolved in a non-aqueous organic solvent, in which ethylene carbonate (EC):ethyl methyl carbonate (EMC) were mixed in a volume ratio of 30:70, at a concentration of 1.0 M, a liquid electrolyte was prepared by adding 1 wt% of vinylene carbonate (VC) as an additive. In this case, viscosity of the liquid electrolyte was 3.5 cP.

(Preparation of Gel Electrolyte Composition)

After $LiN(SO_2F)_2$ was dissolved in a non-aqueous organic solvent, in which ethylene carbonate (EC):ethyl methyl carbonate (DMC) were mixed in a volume ratio of 30:70, such that a molarity of the $LiN(SO_2F)_2$ was 1.0 M, a gel electrolyte composition was prepared by adding 5 wt% of trimethylolpropane triacrylate as a curable polymer, 1 wt% of 2,2'-azobis(isobutyronitrile) (AIBN) as a polymerization initiator, and 1 wt% of vinylene carbonate (VC). In this case, viscosity of the gel electrolyte composition was 5.0 cP.

(Battery Cell Preparation)

A battery cell was prepared in the same manner as in Example 1 except that the above-prepared liquid electrolyte and gel electrolyte composition were injected. In this case, a volume ratio of the liquid electrolyte to the gel electrolyte composition, which were injected into the pouch, was about 100:25.

**Comparative Example 5**

(Preparation of Liquid Electrolyte)

After $LiPF_6$ and $LiN(SO_2F)_2$ were dissolved in a non-aqueous organic solvent, in which ethylene carbonate (EC):ethyl methyl carbonate (EMC) were mixed in a volume ratio of 30:70, such that concentrations of the $LiPF_6$ and the $LiN(SO_2F)_2$ were 0.7 M and 0.3 M, respectively, a liquid electrolyte was prepared by adding 1 wt% of vinylene carbonate (VC) as an additive. In this case, viscosity of the liquid electrolyte was 3.4 cP.

(Preparation of Gel Electrolyte Composition)

After $LiPF_6$ and $LiN(SO_2F)_2$ were dissolved in a non-aqueous organic solvent, in which ethylene carbonate (EC):ethyl methyl carbonate (DMC) were mixed in a volume ratio of 30:70, such that concentrations of the $LiPF_6$ and the $LiN(SO_2F)_2$ were 0.7 M and 0.3 M, respectively, a gel electrolyte composition was prepared by adding 5 wt% of trimethylolpropane triacrylate as a curable polymer, 1 wt% of 2,2'-azobis(isobutyronitrile) (AIBN) as a polymerization initiator, and 1 wt% of vinylene carbonate (VC). In this case, viscosity of the gel electrolyte composition was 4.8 cP.

(Battery Cell Preparation)

After the electrode assembly prepared in Example 1 was accommodated in a pouch, the gel electrolyte composition prepared above was injected into an accommodation space so as to surround an electrode tab and then stored at a high temperature of 60°C for 5 hours in a thermostat to thermally cure the gel electrolyte composition into a gel electrolyte.

Subsequently, after the above-prepared liquid electrolyte was injected into the accommodation space of the pouch such that the electrode assembly was impregnated, the pouch was sealed to prepare a battery cell. In this case, a volume ratio of the liquid electrolyte to the gel electrolyte composition, which were injected into the pouch, was about 100:25.

## Experimental Examples

### Experimental Example 1: Liquid Electrolyte Wettability Evaluation

Time from immediately after dropping 1 ml of the liquid electrolyte used in each of Example 1 and Comparative Examples 1 and 3 to 5 on a surface of the negative electrode using a dropping pipette until the liquid electrolyte was completely absorbed by the negative electrode was measured, and the results thereof are presented in Table 1 below. It may be evaluated that the shorter the measured time was, the relatively better the wettability was.

[Table 1]

|  | Liquid electrolyte wettability (unit: sec) |
|---|---|
| Example 1 | 38 |
| Comparative Example 1 | 60 |
| Comparative Example 3 | 153 |
| Comparative Example 4 | 71 |
| Comparative Example 5 | 65 |

Referring to Table 1, since the liquid electrolyte of Example 1 of the present disclosure had low viscosity due to the low concentration of the second lithium salt, it may be understood that the liquid electrolyte of Example 1 of the present disclosure had relatively better electrode wettability than the liquid electrolytes of Comparative Examples 1 and 3 to 5.

### Experimental Example 2: Internal Resistance Evaluation

After 5 battery cells were prepared for each of the battery cells prepared in Examples 2 to 5 and Comparative Examples 1 to 5, a voltage drop generated while flowing a current of 2.5 C to each electrode lead for 10 seconds was measured, and internal resistance was then calculated using the following Equation (1). Herein, the expression 'internal resistance' means output resistance by electrochemical evaluation. Then, an average rate of change of internal resistance of each battery cell was expressed as a percentage (%) based on an average value of the internal resistances of the battery cells of Comparative Example 1, and presented in Table 2 below.

$$\text{Equation (1): R = V/I,}$$

where R is resistance, V is potential, and I is current.

[Table 2]

|  | Rate of change of internal resistance |
|---|---|
| Example 2 | 93.8 |
| Example 3 | 92.7 |
| Example 4 | 92.8 |
| Example 5 | 92.1 |
| Comparative Example 1 | - |
| Comparative Example 2 | 107.2 |
| Comparative Example 3 | 91.3 |

(continued)

|  | Rate of change of internal resistance |
|---|---|
| Comparative Example 4 | 91.2 |
| Comparative Example 5 | 95.6 |

Referring to Table 2, with respect to the battery cells of Examples 2 to 5 of the present disclosure and the battery cell of Comparative Example 3, since a concentration of the total lithium salt contained in the electrolyte was higher than that of the battery cell of Comparative Example 1, it may be understood that a rate of change of internal resistance was reduced in comparison to that of the battery cell of Comparative Example 1. Particularly, it may be confirmed that the rate of change of internal resistance of the battery cell of Example 5 having the highest concentration of the total lithium salt was the lowest.

With respect to the battery cell of Comparative Example 5, since $LiPF_6$ having high resistance and LiFSI having low resistance were used together as the lithium salt in the electrolyte, it may be understood that internal resistance was reduced in comparison to that of the battery cell of Comparative Example 1. Also, with respect to the battery cell of Comparative Example 4, since the use of $LiPF_6$ having high resistance as the electrolyte lithium salt was excluded, it may be understood that internal resistance was reduced in comparison to that of Comparative Example 1.

In contrast, with respect to the battery cell of Comparative Example 2, since mobility of lithium ions was reduced due to a decrease in concentration of the total lithium salt included in the entire electrolyte, it may be understood that internal resistance was significantly increased in comparison to that of the battery cell of Comparative Example 1.

**Experimental Example 3: Life Characteristics Evaluation of Battery Cell**

In order to evaluate life characteristics of the battery cells prepared in Examples 1 to 5 and the battery cells prepared in Comparative Examples 2 to 5, each battery cell was fixed using a fixing jig, and charge and discharge cycles were performed up to 300 times at a charge current (0.33 C, charge end current (cut-off): 1/20 C) and a discharge current (0.33 C) within an operating voltage range of 2.5 V to 4.2 V in an atmosphere with a temperature of 45°C. In this case, a difference between discharge capacity and charge capacity in a first charge/discharge cycle of the battery cell was defined as charge/discharge efficiency (%) and presented in Table 3 below. In addition, charge/discharge cycle efficiency of each battery cell was measured at 100 charge/discharge cycles and at 300 charge/discharge cycles and presented in Table 3 below.

[Table 3]

|  | 1st charge/discharge cycle efficiency (unit:%) | 100th charge/discharge cycle efficiency (unit:%) | 300th charge/discharge cycle efficiency (unit:%) |
|---|---|---|---|
| Example 1 | 92.5 | 98.3 | 94.7 |
| Example 2 | 92.4 | 98.5 | 95.4 |
| Example 3 | 92.2 | 98.4 | 95.7 |
| Example 4 | 92.4 | 98.7 | 96.2 |
| Example 5 | 92.5 | 94.3 | 92.6 |
| Comparative Example 2 | 92.8 | 98.8 | 88.6 |
| Comparative Example 3 | 89.2 | 92.6 | 90.2 |
| Comparative Example 4 | 93.1 | End of evaluation due to tap disconnection | End of evaluation due to tap disconnection |
| Comparative Example 5 | 92.4 | 98.1 | End of evaluation due to tap disconnection |

Referring to Table 3, with respect to the battery cells of Examples 1 to 4 of the present disclosure, it may be understood that 100th charge/discharge cycle efficiencies were about 98.3% or more, and 300th charge/discharge cycle efficiencies were about 94.7% or more. That is, since the lithium salt consumed in the liquid electrolyte may be replenished while the first lithium salt of the gel electrolyte was transferred to the liquid electrolyte through the interface between the gel electrolyte and the liquid electrolyte during charge and discharge, it was considered that long and short-term life characteristics were excellent.

With respect to the battery cell of Example 5, since fluidity of the gel electrolyte composition was reduced as the viscosity of the gel electrolyte composition was increased due to the inclusion of the somewhat large amount of the lithium salt in the gel electrolyte composition, it was not easy to move the gel electrolyte composition into the accommodation space around the electrode tab, and, as a result, since the disconnection of the tab was caused while the liquid electrolyte penetrated into the accommodation space in which the tab was formed, it may be understood that cycle characteristics were somewhat degraded.

With respect to the battery cell of Comparative Example 2, since impregnability of the liquid electrolyte and the gel electrolyte was excellent due to the low lithium salt concentration, first charge/discharge cycle efficiency was better than those of the examples, but it may be understood that the charge/discharge cycle efficiency was reduced while depletion of the lithium salt was intensified as the charge/discharge cycle proceeded.

With respect to the battery cell of Comparative Example 3, since $LiPF_6$, a lithium salt having high resistance, was used alone in a rather high content, it may be understood that charge/discharge cycle efficiency was reduced in comparison to those of the examples.

With respect to the battery cells of Comparative Examples 4 and 5, since $LiN(SO_2F)_2$, which may cause corrosion of the electrode tab, was included as the lithium salt for a gel electrolyte, initial performance was excellent, but, since the disconnection of the electrode tab was caused as the charge/discharge cycle proceeded, evaluation of lifetime after 100 cycles was ended. Particularly, with respect to the battery cell of Comparative Example 4 having a higher $LiN(SO_2F)_2$ content in the electrolyte, it may be confirmed that the disconnection of the tab occurred more quickly than that of the battery cell of Comparative Example 5.

**Experimental Example 4: High-temperature Safety Evaluation (Hot Box Test)**

The battery cells prepared in Examples 1 to 5 and the battery cells prepared in Comparative Examples 1 to 5 were fully charged at an SOC (State Of Charge) of 100%, the fully charged battery cells were stored in a box, and, after a temperature inside the box was increased from room temperature to 150°C at a rate of 2°C, the battery cells were stored at 150°C for 120 minutes. After checking whether or not the battery cell was ignited during the storage, the number of ignited battery cells among the 5 battery cells is presented in Table 4 below.

**Experimental Example 5: Electrode Tab Durability Evaluation**

The battery cells prepared in Examples 1 to 5 and the battery cells prepared in Comparative Examples 1 to 5 were fully charged at an SOC (State Of Charge) of 100%, and, after the fully charged battery cells were stored in a hot box at 60°C for 2 weeks, the battery cells were disassembled to check whether or not the positive electrode tab (aluminum thin film) was disconnected. In this case, if even one positive electrode tab among the positive electrode tabs of the battery cells was disconnected, it was classified as a battery cell in which the positive electrode tab was disconnected. In addition, the experimental results are presented in Table 4 below.

[Table 4]

|  | Hot box results (the number of ignited cells) | Whether or not the positive electrode tab was disconnected (the number of disconnected cells) |
|---|---|---|
| Example 1 | 3 | 0 |
| Example 2 | 0 | 0 |
| Example 3 | 0 | 0 |
| Example 4 | 0 | 0 |
| Example 5 | 0 | 2 |
| Comparative Example 1 | 5 | 0 |
| Comparative Example 2 | 5 | 0 |
| Comparative Example 3 | 5 | 0 |
| Comparative Example 4 | 0 | 5 |
| Comparative Example 5 | 0 | 2 |

Referring to Table 4, with respect to the battery cells of Examples 2 to 4 of the present disclosure, it was confirmed that no battery cell was ignited in the high-temperature stability evaluation and the disconnection of the electrode tab was not caused.

With respect to the battery cells of Example 1, it may be confirmed that ignition occurred in some battery cells due to the absence of $LiN(SO_2F)_2$ that may improve high-temperature stability. Also, with respect to the battery cells of Example 5, while the liquid electrolyte penetrated into a tab region, it may be confirmed that tab disconnection was caused in some battery cells.

With respect to the battery cells of Comparative Examples 1 to 3, since $LiN(SO_2F)_2$, which caused the corrosion of the electrode tab, was not included in the gel electrolyte, the disconnection of the electrode tab did not occur, but it may be confirmed that ignition occurred in most of the battery cells due to the absence of $LiN(SO_2F)_2$ that may improve high-temperature stability.

With respect to the battery cells of Comparative Examples 4 and 5, it may be confirmed that the disconnection of the electrode tab occurred in most of the battery cells because $LiN(SO_2F)_2$, which caused the corrosion of the electrode tab, was included in the gel electrolyte.

## Description of the Symbols

100: Battery Cell 1000: Battery Module
110: Cell Case 110p1, 110p2: Accommodation Space, Injection Space
113: Blocking Portion
114, 114T, 114P: Pouch, First Cell Sheet, Second Cell Sheet
114a, 114b, 114c, 114d: First Outer Circumferential Portion, Second Outer Circumferential Portion, Third Outer Circumferential Portion, Fourth Outer Circumferential Portion
120, 122, 122p, 122n, 170: Electrode Assembly, Electrode, Positive Electrode, Negative Electrode, Separator
120a, 120b, 120c, 120d: First Side, Second Side, Third Side, Fourth Side
121, 121a, 121b: Electrode Tab, Positive Electrode Tab, Negative Electrode Tab
130, 130a, 130b: Electrode Lead, Positive Electrode Lead, Negative Electrode Lead
140: Insulating Film 111: Sealing Portion
150: Gel Electrolyte 155: Gel Electrolyte Composition
160: Liquid Electrolyte
210: Fixing Jig
310: Cover
211, 212, 213: Pedestal, First Jig Plate, Second Jig Plate
214, 214a, 214b: First Support, Pillar Portion, Connection Portion
215, 215a, 215b: Second Support, Pillar Portion, Connection Portion
X: Interface
123: Passivation Layer
124: Natural Oxide Layer

## Claims

1. A battery cell comprising:

   a cell case having an accommodation space;
   an electrode assembly which is accommodated in the accommodation space and includes a plurality of electrodes, an electrode tab formed on at least one side of each of the plurality of electrodes, and a separator disposed between the plurality of electrodes;
   a gel electrolyte which contains a first molarity of a first lithium salt and is accommodated in the accommodation space while surrounding the electrode tab; and
   a liquid electrolyte which contains a second molarity, which is lower than the first molarity, of a second lithium salt and is accommodated between the plurality of electrodes.

2. The battery cell of claim 1, further comprising a passivation layer which is formed at an interface between the electrode tab and the gel electrolyte by combining the first lithium salt and cations of the electrode tab.

3. The battery cell of claim 2, wherein the passivation layer comprises at least one selected from $AlF_3$ and LiF.

4. The battery cell of claim 1, wherein the first lithium salt and the second lithium salt are same or different from each other;

   wherein the first lithium salt comprises at least one selected from $LiPF_6$ (lithium hexafluorophosphate) and $LiBF_4$ (lithium tetrafluoroborate), and
   the second lithium salt comprises at least one selected from $LiPF_6$, LiFSI (lithium bis(fluorosulfonyl)imide), LiTFSI (lithium bis(trifluoromethanesulfonyl)imide), and LiBOB (lithium bis(oxalato)borate).

5. The battery cell of claim 4, wherein the second lithium salt comprises $LiPF_6$ and at least one selected from LiFSI (lithium bis(fluorosulfonyl)imide), LiTFSI (lithium bis(trifluoromethanesulfonyl)imide), and LiBOB (lithium bis(oxalato)borate).

6. The battery cell of claim 1, wherein the second molarity of the second lithium salt is lower than the first molarity of the first lithium salt by 0.1 M or more.

7. The battery cell of claim 1, wherein the first molarity of the first lithium salt is in a range of 0.6 M to 5.0 M, and the second molarity of the second lithium salt is in a range of 0.5 M to 2.0 M.

8. The battery cell of claim 1, wherein a ratio of the second molarity of the second lithium salt to the first molarity of the first lithium salt is in a range of 1:1.3 to 1:5.

9. The battery cell of claim 1, wherein the gel electrolyte and the liquid electrolyte are disposed to be in contact with each other such that the first lithium salt contained in the gel electrolyte is movable into the liquid electrolyte through an interface between the gel electrolyte and the liquid electrolyte.

10. The battery cell of claim 1, wherein the gel electrolyte is disposed only on one side of the electrode assembly, on which the electrode tab is formed, in the accommodation space to prevent movement and deformation of the electrode tab in the battery cell by an external impact, and wherein the liquid electrolyte surrounds another side of the electrode assembly on which the gel electrolyte is not formed.

11. A battery module comprising at least one battery cell of any one of claims 1 to 10.

12. A method of preparing a battery cell, the method comprising steps of:

   preparing an electrode assembly which includes a plurality of electrodes, an electrode tab formed on at least one side of each of the plurality of electrodes, and a separator disposed between the plurality of electrodes;
   disposing the electrode assembly in an accommodation space of a cell case;
   injecting a gel electrolyte composition containing a first molarity of a first lithium salt and a curable compound into the accommodation space and disposing the gel electrolyte composition around the electrode tab;
   curing the gel electrolyte composition to form a gel electrolyte surrounding the electrode tab; and
   injecting a liquid electrolyte containing a second molarity of a second lithium salt to be accommodated between the plurality of electrodes.

13. The method of claim 12, further comprising a step of forming a blocking portion between the accommodation space of the cell case and an injection space of the gel electrolyte composition, before the injecting of the gel electrolyte composition.

14. The method of claim 12, wherein

   the first lithium salt comprises at least one selected from $LiPF_6$ (lithium hexafluorophosphate) and $LiBF_4$ (lithium tetrafluoroborate),
   the second lithium salt comprises at least one selected from $LiPF_6$, LiFSI (lithium bis(fluorosulfonyl)imide), LiTFSI (lithium bis(trifluoromethanesulfonyl)imide), and LiBOB (lithium bis(oxalato)borate), and
   the second molarity of the second lithium salt is lower than the first molarity of the first lithium salt by 0.1 M or more.

15. The method of claim 12, wherein a ratio of the second molarity of the second lithium salt to the first molarity of the first lithium salt is in a range of 1:1.3 to 1:5.

**Patentansprüche**

1.  Batteriezelle, umfassend:

    ein Zellgehäuse mit einem Aufnahmeraum,
    eine Elektrodenanordnung, die in dem Aufnahmeraum aufgenommen ist und eine Vielzahl von Elektroden, eine Elektrodenlasche, die auf mindestens einer Seite von jeder der Vielzahl von Elektroden gebildet ist, und einem Separator, der zwischen der Vielzahl der Elektroden angeordnet ist, einschließt,
    einen Gelelektrolyten, der eine erste Molarität eines ersten Lithiumsalzes enthält und in dem Aufnahmeraum aufgenommen ist, während er die Elektrodenlasche umgibt, und
    einen flüssigen Elektrolyten, der eine zweite Molarität eines zweiten Lithiumsalzes enthält, die niedriger als die erste Molarität ist, und zwischen der Vielzahl der Elektroden aufgenommen ist.

2.  Batteriezelle nach Anspruch 1, ferner umfassend eine Passivierungsschicht, die an einer Grenzfläche zwischen der Elektrodenlasche und dem Gelelektrolyten durch Kombination des ersten Lithiumsalzes und Kationen der Elektrodenlasche gebildet ist.

3.  Batteriezelle nach Anspruch 2, wobei die Passivierungsschicht mindestens eines, ausgewählt aus $AlF_3$ und LiF, umfasst.

4.  Batteriezelle nach Anspruch 1, wobei das erste Lithiumsalz und das zweite Lithiumsalz gleich oder verschieden voneinander sind,

    wobei das erste Lithiumsalz mindestens eines, ausgewählt aus $LiPF_6$ (Lithiumhexafluorphosphat) und $LiBF_4$ (Lithiumtetrafluorborat), umfasst und
    das zweite Lithiumsalz mindestens eines, ausgewählt aus $LiPF_6$, LiFSI (Lithiumbis(fluorsulfonyl)imid), LiTFSI (Lithiumbis(trifluormethansulfonyl)imid) und LiBOB (Lithiumbis(oxalato)borat), umfasst.

5.  Batteriezelle nach Anspruch 4, wobei das zweite Lithiumsalz $LiPF_6$ und mindestens eines, ausgewählt aus LiFSI (Lithiumbis(fluorsulfonyl)imid), LiTFSI (Lithiumbis(trifluormethansulfonyl)imid) und LiBOB (Lithiumbis(oxalato)borat), umfasst.

6.  Batteriezelle nach Anspruch 1, wobei die zweite Molarität des zweiten Lithiumsalzes um 0,1 M oder mehr niedriger als die erste Molarität des ersten Lithiumsalzes ist.

7.  Batteriezelle nach Anspruch 1, wobei die erste Molarität des ersten Lithiumsalzes in einem Bereich von 0,6 M bis 5,0 M liegt und die zweite Molarität des zweiten Lithiumsalzes in einem Bereich von 0,5 M bis 2,0 M liegt.

8.  Batteriezelle nach Anspruch 1, wobei ein Verhältnis der zweiten Molarität des zweiten Lithiumsalzes zu der ersten Molarität des ersten Lithiumsalzes in einem Bereich von 1:1,3 bis 1:5 liegt.

9.  Batteriezelle nach Anspruch 1, wobei der Gelelektrolyt und der flüssige Elektrolyt so angeordnet sind, dass sie miteinander in Kontakt stehen, so dass das erste Lithiumsalz, das in dem Gelelektrolyten enthalten ist, durch eine Grenzfläche zwischen dem Gelelektrolyten und dem flüssigen Elektrolyten in Richtung des flüssigen Elektrolyten beweglich ist.

10. Batteriezelle nach Anspruch 1, wobei der Gelelektrolyt nur auf einer Seite der Elektrodenanordnung, auf der die Elektrodenlasche gebildet ist, in dem Aufnahmeraum angeordnet ist, um eine Bewegung und Verformung der Elektrodenlasche in der Batteriezelle durch äußere Einwirkung zu verhindern, und wobei der flüssige Elektrolyt eine andere Seite der Elektrodenanordnung umgibt, auf der kein Gelelektrolyt gebildet ist.

11. Batteriemodul, umfassend mindestens eine Batteriezelle nach einem der Ansprüche 1 bis 10.

12. Verfahren zur Herstellung einer Batteriezelle, wobei das Verfahren die Schritte umfasst:

Herstellen einer Elektrodenanordnung, die eine Vielzahl von Elektroden, eine Elektrodenlasche, die auf mindestens einer Seite von jeder der Vielzahl der Elektroden gebildet ist, und einen Separator, der zwischen der Vielzahl der Elektroden angeordnet ist, einschließt,

Anordnen der Elektrodenanordnung in einem Aufnahmeraum eines Zellgehäuses,

Einspritzen einer Gelelektrolytzusammensetzung, die eine erste Molarität eines ersten Lithiumsalzes und eine härtbare Verbindung enthält, in den Aufnahmeraum und Anordnen der Gelelektrolytzusammensetzung um die Elektrodenlasche herum,

Härten der Gelelektrolytzusammensetzung, um einen Gelelektrolyten zu bilden, der die Elektrodenlasche umgibt, und

Einspritzen eines flüssigen Elektrolyten, der eine zweite Molarität eines zweiten Lithiumsalzes enthält, um zwischen der Vielzahl von Elektroden aufgenommen zu werden.

13. Verfahren nach Anspruch 12, ferner umfassend einen Schritt zur Bildung eines Sperrabschnitts zwischen dem Aufnahmeraum des Zellgehäuses und einem Einspritzraum der Gelelektrolytzusammensetzung vor dem Einspritzen der Gelelektrolytzusammensetzung.

14. Verfahren nach Anspruch 12, wobei

das erste Lithiumsalz mindestens eines, ausgewählt aus $LiPF_6$ (Lithiumhexafluorphosphat) und $LiBF_4$ (Lithiumtetrafluorborat), umfasst,

das zweite Lithiumsalz mindestens eines, ausgewählt aus $LiPF_6$, LiFSI (Lithiumbis(fluorsulfonyl)imid), LiTFSI (Lithiumbis(trifluormethansulfonyl)imid) und LiBOB (Lithiumbis(oxalato)borat), umfasst und

die zweite Molarität des zweiten Lithiumsalzes um 0,1 M oder mehr niedriger als die erste Molarität des ersten Lithiumsalzes ist.

15. Verfahren nach Anspruch 12, wobei ein Verhältnis der zweiten Molarität des zweiten Lithiumsalzes zu der ersten Molarität des ersten Lithiumsalzes in einem Bereich von 1:1,3 bis 1:5 liegt.

## Revendications

1. Cellule de batterie comprenant :

un boîtier de cellule, présentant un espace de logement ;

un ensemble d'électrodes, qui est logé dans l'espace de logement et inclut une pluralité d'électrodes, une languette d'électrode formée sur au moins un côté de chaque électrode de la pluralité d'électrodes, et un séparateur disposé entre les électrodes de la pluralité d'électrodes ;

un électrolyte en gel qui contient une première molarité d'un premier sel de lithium et est logé dans l'espace de logement tout en entourant la languette d'électrode ; et

un électrolyte liquide qui contient une deuxième molarité, qui est inférieure à la première molarité, d'un deuxième sel de lithium et est logé entre les électrodes de la pluralité d'électrodes.

2. Cellule de batterie selon la revendication 1, comprenant en outre une couche de passivation qui est formée à une interface entre la languette d'électrode et l'électrolyte en gel en combinant le premier sel de lithium et des cations de la languette d'électrode.

3. Cellule de batterie selon la revendication 2, dans laquelle la couche de passivation comprend au moins un sélectionné parmi $A1F_3$ et LiF.

4. Cellule de batterie selon la revendication 1, dans laquelle le premier sel de lithium et le deuxième sel de lithium sont identiques ou différents l'un de l'autre ;

dans laquelle le premier sel de lithium comprend au moins un sélectionné parmi $LiPF_6$ (hexafluorophosphate de lithium) et $LiBF_4$ (tétrafluoroborate de lithium), et

le deuxième sel de lithium comprend au moins un sélectionné parmi $LiPF_6$, LiFSI (bis(fluorosulfonyl)imide de lithium), LiTFSI (bis(trifluorométhanesulfonyl)imide de lithium) et LiBOB (bis(oxalato)borate de lithium).

5. Cellule de batterie selon la revendication 4, dans laquelle le deuxième sel de lithium comprend $LiPF_6$ et au moins un sélectionné parmi LiFSI (bis(fluorosulfonyl)imide de lithium), LiTFSI (bis(trifluorométhanesulfonyl)imide de lithium) et LiBOB (bis(oxalato)borate de lithium).

6. Cellule de batterie selon la revendication 1, dans laquelle la deuxième molarité du deuxième sel de lithium est inférieure à la première molarité du premier sel de lithium d'au moins 0,1 M.

7. Cellule de batterie selon la revendication 1, dans laquelle la première molarité du premier sel de lithium est dans une gamme allant de 0,6 M à 5,0 M, et la deuxième molarité du deuxième sel de lithium est dans une gamme allant de 0,5 M à 2,0 M.

8. Cellule de batterie selon la revendication 1, dans laquelle un rapport entre la deuxième molarité du deuxième sel de lithium et la première molarité du premier sel de lithium est compris dans une gamme allant de 1:1,3 à 1:5.

9. Cellule de batterie selon la revendication 1, dans laquelle l'électrolyte en gel et l'électrolyte liquide sont disposés de manière à être en contact l'un avec l'autre de telle sorte que le premier sel de lithium contenu dans l'électrolyte en gel soit mobile dans l'électrolyte liquide à travers une interface entre l'électrolyte en gel et l'électrolyte liquide.

10. Cellule de batterie selon la revendication 1, dans laquelle l'électrolyte en gel est disposé uniquement sur un côté de l'ensemble d'électrodes, sur lequel la languette d'électrode est formée, dans l'espace de logement pour empêcher un mouvement et une déformation de la languette d'électrode dans la cellule de batterie par un impact externe, et dans laquelle l'électrolyte liquide entoure un autre côté de l'ensemble d'électrodes sur lequel l'électrolyte en gel n'est pas formé.

11. Module de batterie comprenant au moins une cellule de batterie selon l'une quelconque des revendications 1 à 10.

12. Procédé de préparation d'une cellule de batterie, le procédé comprenant les étapes qui suivent :

préparer un ensemble d'électrodes qui inclut une pluralité d'électrodes, une languette d'électrode formée sur au moins un côté de chaque électrode de la pluralité d'électrodes, et un séparateur disposé entre les électrodes de la pluralité d'électrodes ;
disposer l'ensemble d'électrodes dans un espace de logement d'un boîtier de cellule ;
injecter une composition d'électrolyte en gel contenant une première molarité d'un premier sel de lithium et un composé durcissable dans l'espace de logement et disposer la composition d'électrolyte en gel autour de la languette d'électrode ;
durcir la composition d'électrolyte en gel pour former un électrolyte en gel entourant la languette d'électrode ; et injecter un électrolyte liquide contenant une deuxième molarité d'un deuxième sel de lithium devant être logé entre les électrodes de la pluralité d'électrodes.

13. Procédé selon la revendication 12, comprenant en outre une étape de formage d'une partie de blocage entre l'espace de logement du boîtier de cellule et un espace d'injection de la composition d'électrolyte en gel, avant l'injection de la composition d'électrolyte en gel.

14. Procédé selon la revendication 12, dans lequel

le premier sel de lithium comprend au moins un sélectionné parmi LiPF$_6$ (hexafluorophosphate de lithium) et LiBF$_4$ (tétrafluoroborate de lithium),
le deuxième sel de lithium comprend au moins un sélectionné parmi LiPF$_6$, LiFSI (bis(fluorosulfonyl)imide de lithium), LiTFSI (bis(trifluorométhanesulfonyl)imide de lithium) et LiBOB (bis(oxalato)borate de lithium), et
la deuxième molarité du deuxième sel de lithium est inférieure à la première molarité du premier sel de lithium d'au moins 0,1 M.

15. Procédé selon la revendication 12, dans lequel un rapport entre la deuxième molarité du deuxième sel de lithium et la première molarité du premier sel de lithium est compris dans une gamme allant de 1:1,3 à 1:5.

100

130

130a     130b

110

111

P

Y

X

FIG.1

FIG.2

FIG.3

FIG.4

FIG.5

114

114b

111

114c

114a

110p1    114d

Z

X

FIG.6

FIG.7

114c

114b

110p2

114T

114

114d

110p1

120

120a

113    155

121a    121b

121

114a

z

x

FIG.8

FIG.9

FIG.10

FIG.11

FIG.12

100

114

FIG.13

FIG.14

150
123
124
121

FIG.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220027003
- KR 1020220027007
- KR 100558843 B1
- CN 103000956 A
- CN 113161621 A